# EUROPÄISCHE PATENTSCHRIFT

(11) **EP 1 213 987 B1**
(45) Veröffentlichungstag und Bekanntmachung des Hinweises auf die Patenterteilung: **02.07.2003**
(21) Anmeldenummer: 00960683.1
(22) Anmeldetag: 21.09.2000
(51) Int. Cl.: A47J 37/12

(54) **VERFAHREN ZUM FRITIEREN VON FRITIERGUT UND VORRICHTUNG ZU DESSEN DURCHFÜHRUNG**
METHOD FOR DEEP-FRYING PRODUCTS TO BE DEEP-FRIED AND DEVICE FOR CARRYING OUT THIS METHOD
PROCEDE DE FRITURE DE PRODUITS A FRIRE ET DISPOSITIF CORRESPONDANT

(30) Priorität: 21.09.1999 US 154995 P
(43) Veröffentlichungstag der Anmeldung: 19.06.2002
(73) Patentinhaber: Nockemann, Bernd HM, 58553 Halver (DE); Nockemann, Martin HM, 28217 Bremen (DE)
(72) Erfinder: NOCKEMANN, Otto, . (DE)
(74) Vertreter: Linnemann, Winfried
(86) Internationale Anmeldenummer: EP0009227
(87) Internationale Veröffentlichungsnummer: WO01021051

(56) Entgegenhaltungen:
- EP-A- 0 426 516
- WO-A-95/16379
- US-A- 1 659 415
- US-A- 3 638 558
- US-A- 3 688 683
- US-A- 4 623 544

## Beschreibung

Die vorliegende Erfindung betrifft ein Verfahren zum Frittieren von Frittiergut sowie eine Vorrichtung zur Durchführung des Verfahrens.

### Ausgangssituation und Stand der Technik

In konventionellen Tauchfritteusen wird wenig Frittiergut in relativ viel heißem Fett frittiert.
Qualitätsmerkmale des Frittiergutes sind eine feine Kruste, ein weiches, heißes Inneres und ein geringer Fettgehalt, der jedoch nicht so gering sein darf, dass der typische Frittiergeschmack nachlässt.
Die außerordentlich geringe Wärmeleitfähigkeit des Fettes erfordert in Tauchfritteusen herkömmlicher Bauart eine große Fettmenge als Wärmespeicher, um nach dem Einsetzen des Frittiergutes den Temperaturabfall in der Frittierzone so weit zu begrenzen, dass die Krustenbildung möglichst frühzeitig das weitere Vollsaugen des Frittiergutes mit Fett unterbindet. Die große Fettmenge in der Tauchfritteuse muss wegen der langen Aufheizzeit ganztägig beheizt werden. Außerdem herrschen an den Heizstäben Temperaturen von bis zu 300°C, der Temperaturgradient beträgt also 130°C bei einer zu erreichenden Fetttemperatur von 170°C. Diese partielle Überhitzung und die thermische Dauerbelastung des Fettes tragen in erheblichem Ausmaß zur Abnahme der Fettqualität bei.

In der Anordnung einer Tauchfritteuse herkömmlicher Bauart (stehende Flüssigkeit, Beheizung mittels inliegender Heizwendel oder über die Außenwände) verstärkt sich beim Frittieren der Temperaturabfall in der Frittierzone mit der Verringerung der Fettmenge, da der Abkühleffekt durch das eingesetzte Frittiergut aufgrund der äußerst langsamen Wärmekonvektion im Medium durch zusätzliche Beheizung nicht auszugleichen ist. Ein Beispiel hierfür sind handelsübliche Haushaltsfritteusen, die stets minderwertige Frittiergutqualität hervorbringen.

In der Systemgastronomie wird deshalb der Weg beschritten, die Fettmenge und damit den Wärmevorrat in der Tauchfritteuse immer weiter zu erhöhen, entsprechend einem Frittiergut-zu-Fett-Verhältnis von z.Zt. bis zu ca. 1:29, entsprechend zwei Körben à 680g Pommes frites in 40 Liter Fett, und sogar bis 1:58, da häufig nur ein Korb eingesetzt wird. Der zusätzliche Effekt ist aber auch hier aufgrund der langsamen Wärmekonvektion von den Heizflächen zur Frittierzone begrenzt und die Frittierqualität weiter verbesserungsfähig.

Auf der anderen Seite ist eine Reduktion der Fettmenge wünschenswert, da hiermit einige Vorteile verbunden sind: Pommes frites nehmen während des Frittiervorgangs ca. 5% des Einsatzgewichtes an Frittierfett auf. Dieses dem Gesamtsystem entzogene Fett muss durch Frischfett ersetzt werden, um die Gesamtfettmenge zu erhalten. In Tauchfritteusen herkömmlicher Bauart bewirkt dies zwar eine kurzzeitige Verbesserung der Fettqualität, jedoch kumulieren mit der Zeit die gelösten Schadstoffe, so dass die Fettqualität immer weiter abnimmt bis die Grenzwerte nach ca. 20-30 Betriebsstunden überschritten sind und nach ca. 20-30 Betriebsstunden überschritten sind und der gesamte Fritteuseninhalt verworfen werden muss. Als wichtigste Schadstoffe sind Polare Anteile und Polymere zu nennen. Sie entstehen aus Abbauprodukten des Frittiergutes und chemisch umgewandelten Fettbestandteilen (s.o.: thermische Dauerbelastung und partielle Überhitzung). Die ***Frittiergut***qualität sinkt nach ca. 4-5 Betriebsstunden mit dem Ansteigen der gelösten Schadstoffe, also mit der fortschreitenden Verschlechterung der ***Fett***qualität, da die Schadstoffe in das Frittiergut aufgenommen werden. Der Auffrischungseffekt durch den Ersatz des ausgetragenen Fettes ist also nicht von Dauer und kann die Verschlechterung der Fettqualität bis zum gesetzlich vorgeschriebenen Austauschpunkt (für Polare Anteile 24%, für Polymere Anteile 12%) letztlich nicht verhindern.
Bei Reduktion der Fettmenge im Verhältnis zur Frittiergutmenge erhöht sich der Auffrischungseffekt durch den Ersatz des ausgeschleppten Fettes proportional (denn die ausgetragene und zu ersetzende Fettmenge bleibt mit der Frittiergutmenge konstant, während die aufzufrischende Fettmenge reduziert wird) bis schließlich die Schadstoffe nicht mehr über die Grenzwerte hinaus kumulieren, sondern sich um einen konstanten Wert herum einpendeln, der umso niedriger ist, je enger das Frittiergut-zu-Fett-Verhältnis ist.
Bei solcher effektiver Auffrischung entfällt somit zwar das Aufkommen von zu entsorgendem Altfett und es kann eine gleichbleibend gute ***Fett***qualität erreicht werden, jedoch ist nach dem Stand der Technik im Tauchfrittierverfahren ein für das Qualitätsfrittieren hinreichender Wärmetransport in die Frittierzone nicht zu erreichen. Aufgrund der zu geringen und nicht steigerbaren Frittiertemperatur dringt bis zur Krustenbildung so viel Fett in das Frittiergut ein, dass die ***Frittiergut***qualität massiv sinkt (in diesem Fall nicht durch Anreicherung von Schadstoffen, sondern durch Nicht-Erreichen der o.g. Qualitätsmerkmale).

Aus US 3 638 558 sind ein Verfahren und eine Vorrichtung zum Frittieren von Frittiergut mit heißem Fett bekannt, bei denen das Fett mittels einer Pumpe in einem Kreislauf geführt wird, in welchem es erwärmt und mit dem Frittiergut in Kontakt gebracht wird. Hierbei wird stets eine relativ große Menge von heißem Fett während des Frittiervorganges mit einer relativ kleinen Menge von Frittiergut in Kontakt gebracht. Nachteilig ist hierbei zum Beispiel, dass die relativ große Fettmenge nicht schnell für einzelne Frittiervorgänge aufgeheizt werden kann. Daher muss das Fett ständig auf Betriebstemperatur, etwa 170° bis 190° C, gehalten werden und ist somit ebenfalls einer schädlichen Dauerbelastung ausgesetzt. Ein Auffrischeffekt wie oben beschrieben wird auch nicht erreicht. Außerdem ist dieses Verfahren nach dem Stand der Technik sehr kostenintensiv und zudem umweltschädlich, da stets eine große Menge an Frischfett benötigt wird, um eine relativ geringe Menge Frittiergut zu frittieren. Die Vorteile dieses Kreislauffrittierverfahren gegenüber dem Tauchfrittierverfahren betreffen lediglich die Temperatur***verteilung*** in der Frittierzone.

Nach dem Stand der Technik ist es also nicht möglich unter Ausnutzung der Vorteile einer reduzierten Fettmenge qualitativ hochwertiges Frittiergut herzustellen.

### Aufgabe

Ausgehend von diesem Stand der Technik liegt der vorliegenden Erfindung die Aufgabe zugrunde, ein Verfahren zum Frittieren von Frittiergut sowie eine Vorrichtung zu seiner Durchführung bereitzustellen, welche durch die Minimierung der Fettmenge eine gleichbleibende **Fett**qualität garantieren, das Aufkommen von zu entsorgendem Altfett vermeiden und den Einsatz von Frischfett auf den Ersatz des mit dem Frittiergut ausgetragenen Fettes begrenzen, welche auf der anderen Seite aber ausreichend hohe Temperaturen in der Frittierzone erzeugen und beim Frittieren erhalten können, um eine den Erfordernissen der System- und Individualgastronomie genügende **Frittiergut**qualität zu erreichen, diese darüber hinaus zu verbessern und unbegrenzt und konstant aufrecht zu erhalten. Außerdem soll eine thermische Dauerbelastung und eine partielle Überhitzung des Fettes vermieden werden, um die Schadstoffentstehung zu begrenzen.

### Erläuterung des Verfahrens und der Vorrichtung

Die Aufgabe wird in bezug auf das Verfahren durch Patentanspruch 1 und in bezug auf die Vorrichtung durch Patentanspruch 8 gelöst.

Dadurch, dass die im Kreislauf zirkulierende Menge des Fettes so gering wie möglich gehalten wird, dass das Verhältnis des Gesamtgewichtes des Frittiergutes und des zirkulierenden Fettes zwischen 1:1,5 und 1:6, vorzugsweise zwischen 1:2 und 1:3,5, liegt und dass das durch das Frittiergut ausgetragene Fett fortlaufend durch entsprechende Mengen frischen Fettes ersetzt wird, wird vorteilhaft ermöglicht, dass der fortlaufende Ersatz des mit dem Frittiergut ausgetragenen Fettes durch Frischfett einen so großen Anteil an der minimierten Gesamtfettmenge ausmachen kann, dass diese immer in gutem Qualitätszustand bleibt und das Aufkommen von zu entsorgendem Altfett gänzlich vermieden wird. Dabei reicht die im Fettkreislauf zirkulierende Fettmenge stets gerade aus, den Kreislauf nicht unterbrechen zu lassen. Die kleine Menge zirkulierenden Fettes erlaubt extrem kurze Aufheizzeiten, so dass für jeden Frittiervorgang das Fett nach Bedarf erhitzt werden kann. Ein ständiges Warmhalten einer großen Fettmenge, welche zu einer schädlichen Dauerbelastung des Fettes führen würde und außerdem sehr energieintensiv wäre, wird somit verhindert. Da durch das Frittiergut ein relativ hoher Anteil an der geringen Gesamtfettmenge im Kreislauf ausgetragen wird, wird bei dem erfindungsgemäßen Verfahren durch die Zuführung von Fett stets das mit dem Frittiergut ausgetragene Fett durch Frischfett ersetzt, so dass die zirkulierende Fettmenge auf einem gleichmäßig niedrigen Niveau gehalten werden kann. Dadurch bleibt einerseits die Minimierung der Fettmenge erhalten, andererseits wird der Pumpenkreislauf nicht durch Fettmangel unterbrochen.

Besonders im Vergleich mit Tauchfritteusen nach dem Stand der Technik oder Kreislauffritteusen mit herkömmlich großer Fettmenge ermöglicht das erfindungsgemäße Frittierverfahren bzw. die entsprechende Vorrichtung mindestens die gleiche Frittiergutqualität mit einem deutlich verringerten Fetteinsatz bei einer deutlich verbesserten konstanten Fettqualität. Werden z.B. die üblichen 680g Pommes frites in 2,5 Liter Fett frittiert (Verhältnis ca. 1:3,7), statt in 10-20 Liter, wie in Tauchfritteusen, dann ist bei einer Fettaufnahme von 5% des Einsatzgewichtes des Frittiergutes die gesamte Fettmenge nach ca. 74 Frittierungen vollständig durch Frischfett ersetzt. Dieser Auffrischeffekt übertrifft in der geringen Gesamtfettmenge die Verschmutzung des Fettes und führt dazu, dass das Gesamtfett immer in gutem Qualitätszustand bleibt und jeglicher Fettaustausch eingespart wird. Durch die geringe Gesamtfettmenge sind außerdem kurze Aufheizzeiten gegenüber dem Tauchfrittierverfahren zu erreichen, so dass eine Dauerbeheizung nicht notwendig ist. Durch Fett- und Energieeinsparung werden die Betriebskosten gegenüber einer vergleichbaren 10 l Tauchfritteuse um mindestens Euro 700,-- pro Jahr gesenkt. Durch die Art der Erhitzung auf großer Heizfläche in dünner Schicht bei schnellem Durchlauf wird in dieser Anordnung erstmals erreicht, dass der Abkühleffekt durch das Frittiergut in einer geringen Gesamtfettmenge so weit ausgeglichen wird, dass eine konstant hohe Frittiertemperatur resultiert. Außerdem werden kürzeste Frittierzeiten und geringste Auffettung der Produkte ermöglicht, weil die Wärme von durchströmendem Fett mit bisher nicht erreichter Intensität auf die Oberflächen des Frittiergutes geleitet wird. Die Art der Erhitzung ermöglicht außerdem einen deutlich reduzierten Temperaturgradienten, so dass eine partielle Überhitzung an den Heizflächen vermieden wird.

Weitere vorteilhafte Weiterbildungen der vorliegenden Erfindung werden in den weiteren abhängigen Ansprüchen angegeben.

Eine vorteilhafte Ausführungsform des erfindungsgemäßen Verfahrens sieht vor, dass die Durchströmung mit Fett eines im Fettkreislauf befindlichen Behälters zur Aufnahme von Frittiergut innerhalb von 4 bis 6 sec stattfindet. Durch diese schnelle Umwälzung der kleinen Fettmenge wird eine extrem schnelle Aufheizung der Oberflächen des Frittiergutes erreicht, wie sie mit bisher keiner anderen Methode möglich ist. Das durch den Kontakt mit dem Frittiergut erkaltete Fett wird schnell abgeführt und durch nachfließendes heißes Fett ersetzt. Die dadurch stattfindende schnelle "Versiegelung" des Frittiergutes bewirkt eine geringe Fettaufnahme sowie eine sehr kurze Frittierzeit des Frittiergutes.

Eine vorteilhafte Weiterbildung der erfindungsgemäßen Vorrichtung sieht vor, dass die Förderrichtung der Pumpe umkehrbar ist und dass die Pumpe ein Umkehrelement mit Zeitschaltfunktion aufweist, welches nach einer vorgebbaren Frittierzeit die Förderrichtung der Pumpe umkehrt. Hiermit wird erreicht, dass nach Ablauf einer vorgegebenen Frittierzeit zum Beispiel durch Polumschaltung der Pumpe solange die Förderrichtung umgekehrt werden kann, bis das verbleibende Fett aus dem Behälter mit Frittiergut abgesaugt ist. Diese Schaltung ersetzt den bei Hochleistungsfritteusen bisheriger Bauart zunehmend üblichen Korblift von Baukosten von ca. Euro 500,-- durch eine Schaltung im Wert von weniger als Euro 50,--. Außerdem wird damit besonders für die Fastfood-Gastronomie als finanzstarkem Hauptanwender für Frittiertechnik eine Vorrichtung zur Verfügung gestellt, welche die Qualität der Frittierprodukte weitgehend unabhängig macht von der Aufmerksamkeit von schlecht geschulten Hilfskräften. Fahrlässiges oder böswilliges Frittieren in verdorbenem Fett ist mit der vorliegenden Erfindung auszuschließen. Es kann nur frittiert werden, wenn genügend Fett im Kreislauf vorhanden ist. Fettdefizite werden aber stets durch das erforderliche Frischfett ersetzt und das Frittierfett im Kreislauf bleibt somit in gutem Zustand. Die höheren Herstellungskosten erfindungsgemäßer Vorrichtungen gegenüber Hochleistungsfritteusen ohne Korblift werden schon nach weniger als einem Jahr eingespart. Zudem sind erfindungsgemäße Vorrichtungen im Vergleich mit Korbliftfritteusen in Preis und Leistung konkurrenzlos.

Eine weitere vorteilhafte Weiterbildung der Vorrichtung sieht vor, dass der Raum zwischen dem Behälterboden und dem Frittiergut auf der Seite des Frittiergutes durch eine Lochplatte begrenzt ist, deren Löcher so angeordnet bzw. dimensioniert sind, dass das Fett aus dem Raum gleichmäßig über die Fläche der Lochplatte verteilt in das Frittiergut strömt. Hiermit wird eine gleichförmige Kontaktierung des gesamten Frittiergutes mit dem heißen Fett ermöglicht.

Eine weitere vorteilhafte Ausführung der Vorrichtung sieht vor, dass ein in den Behälter einsetzbarer Korb für die Aufnahme des Frittiergutes vorgesehen ist und dass die Oberkante des Korbes über die Oberkante des oben offenen Behälters hinausragt und der Korb zumindest im über die Oberkante des Behälters hinausragenden Bereich solche Löcher aufweist, dass diese vom Frittiergut separierte Partikel im Korb zurückhalten. Hiermit wird erreicht, dass von dem Frittiergut gelöste Partikel nicht in den Fettkreislauf gelangen und somit die Fettqualität verschlechtern können, da die Partikel mitsamt dem Frittiergut im Korb verbleiben und zusammen mit diesem dem Kreislauf entnommen werden können.

Eine weitere vorteilhafte Weiterbildung der Vorrichtung sieht vor, dass in der Seitenwand des Behälters für die Aufnahme von Frittiergut in Bodennähe eine Öffnung für die Rückführung des Fettes zur Heizvorrichtung vorgesehen ist, welche während der Aufheizphase des Fettes geöffnet und während der Frittierphase geschlossen ist. Hiermit wird eine sehr rasche Aufheizung des im Kreislauf befindlichen Fettes ermöglicht.

Eine weitere erfindungsgemäße Maßnahme zum raschen Aufheizen des Fettes auf Frittiertemperatur besteht darin, dass der Frittierkorb mit dem Frittiergut eingesetzt wird bevor die Fritteuse angeschaltet wird, ohne Beachtung der aktuellen Fetttemperatur. Diese weitere, besonders vorteilhafte Weiterbildung des Verfahrens und der Vorrichtung sieht vor, dass nach dem Einschalten der Fritteuse die Pumpe das Frittierfett zunächst in einen kleinen Kreislauf pumpt, indem sie das Fett über ein temperaturgesteuertes Magnetventil, bzw. ein Thermostatventil, direkt in den oberen Bereich des Fettsammelraumes fördert. Hat das Fett Frittiertemperatur (z.B. 180°C) erreicht, wird das Ventil geschlossen und das heiße Fett wird über eine vor dem Ventil abgehende Leitung in das Frittiergut gefördert. Damit beginnt der mehrfach beschriebene Frittierkreislauf. Das Ende der Frittierung wird nach empirisch ermittelter Zeit durch ein akustisches oder optisches Signal angezeigt. Auf diese Weise wird das Bedienungspersonal von jeder Beobachtung der Fetttemperatur entlastet.

Eine weitere vorteilhafte Weiterbildung der Vorrichtung sieht vor, dass der Behälter für die Aufnahme von Frittiergut aus einem Basisteil mit geringer Höhe und einem in das Basisteil flüssigkeitsdicht einsetzbaren Einsatzteil mit einer für die Aufnahme des Frittiergutes ausreichenden Höhe besteht, wobei das Einsatzteil während der Aufheizphase für das Fett abgenommen und während der Frittierphase eingesetzt ist. Hiermit wird erreicht, dass bei abgenommenem Einsatzteil während der Aufheizphase eine sehr schnelle Aufheizung des Fettes erreicht werden kann (analog zu dem Öffnen der Öffnung für die Rückführung im oben beschriebenen Ausführungsbeispiel).

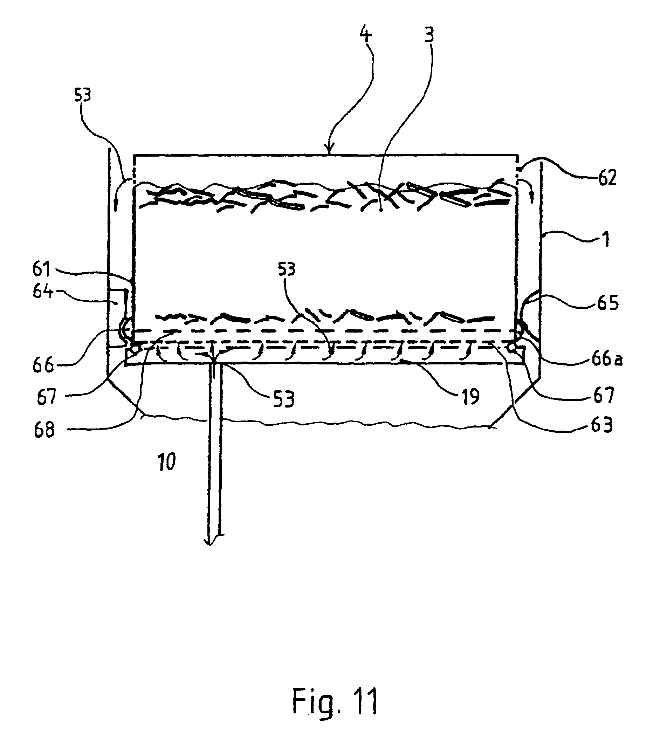

Eine erfindungsgemäße Ausführung stellt ein herausnehmbarer Frittierbehälter dar, über dessen Oberkante das Frittierfett überläuft. Der Frittierbehälter ist mit einem Filterboden verbunden, der den Boden des Außenbehälters bedeckt. Das Filtermaterial des Filterbodens ist umlaufend unter der Kante des Frittierbehälters unterbrochen, in der Weise, dass zwei filtermechanisch voneinander getrennte Filterflächen entstehen, eine zentrale als Boden des Frittierbehälters und eine umlaufende, die gemeinsam den Filterboden bilden. Frittierbehälter und Filterboden sind entnehmbar und werden arretiert und abgedichtet analog zu Fig. 11 (Korb mit integrierter Filterung). In den Frittierbehälter wird ein üblicher Frittierkorb aus Drahtgeflecht eingesetzt. Das Fett steigt im Frittierbehälter auf, durchströmt das Frittiergut im Korb und läuft über die Oberkante des Frittierbehälters, um durch den umlaufenden Filterboden abzulaufen. Alternativ zu dem umlaufenden Teil des Filterbodens werden umlaufend separat entnehmbare Filtersäcke zwischen den Außenbehälter und den Frittierbehälter eingesetzt, die auf dem Rand des Frittierbehälters dicht aufsitzen, so dass das überlaufende Fett zuverlässig durch die Filtersäcke abfließt.

Eine besonders günstige, erfindungsgemäße Ausführung stellt ein Korb mit - mit Ausnahme der Überlauföffnungen - geschlossenen Seitenwänden dar. Die Höhe, in der sich die mit geeignetem Filtermaterial ausgestatteten Überlauföffnungen befinden, bestimmt die Füllhöhe des Korbes mit Frittiergut. Die geschlossenen Seitenwände ersetzen hier den beschriebenen Frittierbehälter, in den ein Drahtkorb eingesetzt wird. In dem seitlich geschlossenen Frittierkorb liegt das Frittiergut auf einem weitmaschigen Drahtboden. Unterhalb dieses Drahtbodens befindet sich an drei Seiten eine Einschubleiste für einen auswechselbaren Filterboden. An der verbleibenden offenen Seite kann der Filterboden horizontal herausgezogen werden. Alternativ kann der Filterboden unter oder in dem Korb mit einem Klemmmechanismus nach dem Stand der Technik arretiert werden. Mit Hilfe einer weiteren Arretiervorrichtung wird der Korb dicht auf dem Boden des Außenbehälters gehalten, um zu verhindern, dass aufsteigendes Fett zwischen Korb und Außenbehälter gelangt und dort abfließt. Fig. 11 zeigt eine mögliche Form der Arretiervorrichtung durch Federstahlelemente. Die Abdichtung wird gewährleistet durch ein Dichtungsband, z.B. bestehend aus PTFE, das umlaufend unter der Kante des Korbes im Boden des Außenbehälters angebracht ist.

Eine weitere vorteilhafte Ausführungsform der erfindungsgemäßen Vorrichtung sieht vor, dass eine Leitung für die Zuführung von Fett in den Behälter für die Aufnahme von Frittiergut innerhalb von dessen Umgrenzung und in Höhe von dessen Oberkante endet und an diesem Ende mit Auslassöffnungen versehen ist. Hiermit wir ermöglicht, die eingangs beschriebenen Vorteile auch mit einer Vorrichtung zu erreichen, welche das zugeführte heiße Fett von oben auf das Frittiergut einleitet.

Eine weitere vorteilhafte Ausführungsform der erfindungsgemäßen Vorrichtung sieht vor, dass zum Ablassen des Fettes zumindest an der tiefsten Stelle des Kreislaufes ein Ablaufhahn vorgesehen ist. Hiermit wird ermöglicht, dass zu Reinigungszwecken das Fett komplett aus der Vorrichtung entnehmbar ist und somit eine Spülung mit Reinigungsflüssigkeit ermöglicht wird, um den hygienischen Anforderungen Genüge zu leisten.

Weitere vorteilhafte Ausführungsformen der erfindungsgemäßen Vorrichtung bzw. des erfindungsgemäßen Verfahrens werden in den übrigen abhängigen Ansprüchen angegeben. Die vorliegende Erfindung wird nun anhand mehrerer Figuren erläutert.

### Erläuterung der Figuren 1-11:

Es zeigen:
Fig. 1 eine erfindungsgemäße Frittiervorrichtung während der Frittierphase,
Fig. 2 eine weitere Ausführungsform einer erfindungsgemäßen Frittiervorrichtung mit einem zusätzlichen Vorratsbehälter,
Fig. 3 eine Detailansicht des Frittierbehälters einer erfindungsgemäßen Frittiervorrichtung während der Aufheizphase,
Fig. 4 eine Detailansicht des Frittierbehälters einer erfindungsgemäßen Frittiervorrichtung während des Frittiervorgangs,
Fig. 5 eine Detailansicht der Fettzuleitung zum Frittierraum mit einem Kurzschluss zum Fettsammelraum,
Fig. 6 eine Detailansicht einer weiteren Ausführungsform einer erfindungsgemäßen Frittiervorrichtung während der Aufheizphase,
Fig. 7 eine Detailansicht der in Fig. 6 gezeigten Frittiervorrichtung mit aufgesetztem Einsatzteil während der Frittierphase,
Fig 8 eine weitere Ausführungsform einer erfindungsgemäßen Frittiervorrichtung mit einem zusätzlichen Filter,
Fig 9 eine weitere Ausführungsform der in Fig. 8 gezeigten erfindungsgemäßen Frittiervorrichtung mit einem zusätzlichen Filter an anderer Stelle,
Fig. 10 eine weitere Ausführungsform einer erfindungsgemäßen Frittiervorrichtung und
Fig. 11 eine Detailansicht einer erfindungsgemäßen Frittiervorrichtung mit einem Frittierkorb mit integrierter Filterung.

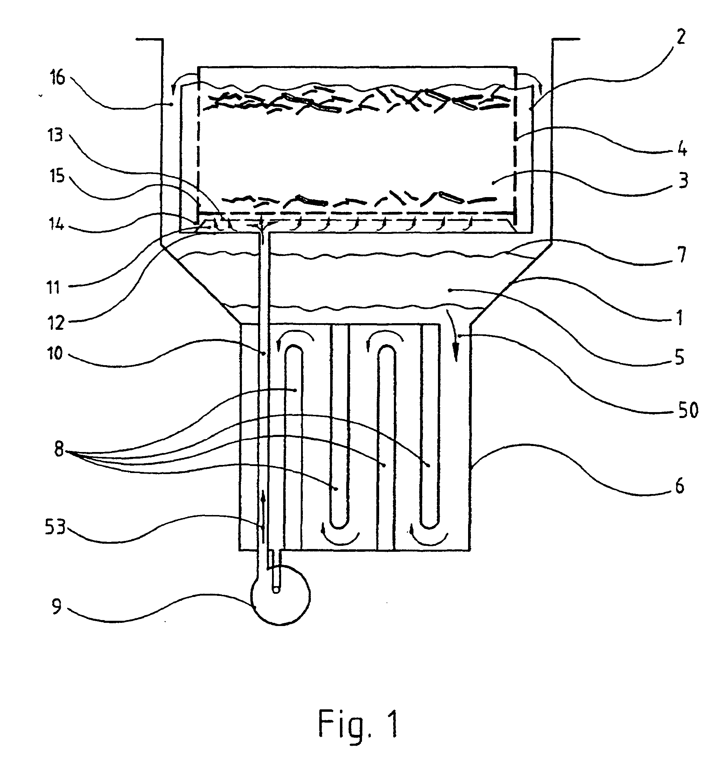

Fig. 1 zeigt eine erfindungsgemäße Frittiervorrichtung. Ein durch ein Vorrichtungsgehäuse 1 gebildeter Außenbehälter enthält in seinem oberen Bereich den Frittierbehälter 2 mit dem Frittiergut 3 im Frittierkorb 4. Frittierkorb 4 und Frittierbehälter 2 sind im wesentlichen quaderförmig ausgeführt. Selbstverständlich sind auch weitere Ausführungsformen möglich, so können Frittierkorb und Frittierbehälter auch zumindest abschnittsweise zylinderförmig ausgeführt sein. Unterhalb des Frittierbehälters 2 befindet sich der Fettsammelraum 5 des Außenbehälters 1. Unterhalb des Fettsammelraumes 5 befindet sich ein Heizraum 6. Der Heizraum 6 ist über eine zu dem Fettsammelraum 5 hin offene Leitung 50 mit diesem verbunden. Der Außenbehälter 1 bildet mit der Seitenwand des Frittierbehälters 2, welcher das Frittiergut bzw. den Frittierkorb 4 aufnimmt, einen Spalt 16 zur Weiterleitung des aus dem Frittierbehälter über dessen Oberkante zu dem Fettsammelraum 5 bzw. Heizraum 6 hinaustretenden Fettes.
Der Fettsammelraum 5, welcher sich unterhalb des Frittierbehälters 2 befindet, hat eine im Wesentlichen pyramidenstumpfförmige Form. Andere Ausführungsformen sind selbstverständlich möglich. Unterhalb des Fettsammelraumes 5 befindet sich ein Heizraum 6, welcher vorzugsweise Flächenheizkörper 8 aufweist, die in geringem gegenseitigen Abstand parallel zueinander so angeordnet sind, dass sie einen mäanderförmigen (oder alternativ einen wellenförmigen) Strömungspfad für das hindurchströmende Fett bilden. Die Heizkörper 8 können auch weiter oben in Kontakt mit dem Boden des Behälters 2 angeordnet sein. Wenn die Fritteuse außer Betrieb ist, füllt das Frittierfett den Fettsammeiraum 5 bis zum maximalen Füllstand 7. Die Heizkörper 8 im Heizraum 6 sind so angeordnet, dass das Frittierfett in dünnen Schichten an großen Heizflächen vorbeifließt. Es nimmt dadurch auch bei hoher Fließgeschwindigkeit von den maximal 190°C bis 210°C heißen Oberflächen der Heizkörper 8 genügend Wärme auf, um von der Pumpe 9 als 170° bis 180° C heißes Frittierfett in Richtung der Pfeile 53 gefördert zu werden. Am Ende des von den Heizkörpern 8 gebildeten mäanderförmigen Strömungspfades schließt sich eine Pumpe 9 an den Heizraum 6 an. Die Pumpe 9 ist über eine Förderleitung 10 mit dem Frittierbehälter verbunden. Die Pumpe 9 liegt also im Fettkreislauf stromabwärts der aus Heizraum 6 und Heizkörpern 8 gebildeten Heizvorrichtung und stromaufwärts des Behälters für die Aufnahme von Frittiergut. Die Förderrichtung der Pumpe 9 ist umkehrbar. Außerdem enthält die Pumpe 9 ein nicht dargestelltes Umkehrelement mit Zeitschaltuhr, welches nach einer vorgegebenen Frittierzeit die Förderrichtung der Pumpe von der während der Frittierzeit eingestellten Richtung 53 umkehrt. Im Bereich der Pumpe 9, welche den tiefsten Punkt des Fettkreislaufes darstellt, ist ein hier nicht dargestellter Ablaufhahn vorgesehen, welcher zum Entleeren der gesamten im Fettkreislauf befindlichen Fettmenge dient. Die beiden Bleche 12 und 13 sind seitlich rundum dicht miteinander verbunden und bilden das Verteilerelement 11, aus dem das heiße Fett nur durch die Öffnungen im Verteilerblech 13 in Richtung des Frittiergutes 3 ausströmen kann. Das Verteilerelement 11 ist über eine im Bodenblech 12 befindliche Öffnung mit der Förderleitung 10 verbunden. Das durch die Förderleitung 10 in den Boden 12 des Verteilerelements 11 bzw. des Behälters 2 geförderte Fett wird in dem Verteilerelement aufgenommen und durch die im Blech 13 befindlichen Löcher so nach oben durchgelassen, dass eine möglichst gleichförmige Verteilung des Fettes in dem Frittierbehälter 2 erreicht wird.

Zur Vergleichmäßigung der Umströmung des Frittiergutes 3 sind verschiedene Maßnahmen vorgesehen. Zunächst wird durch die Pumpe 9 ein so hoher Staudruck im Inneren des Verteilerelementes 11 erzeugt, dass das Fett mit einheitlicher Geschwindigkeit aus sämtlichen Öffnungen des Verteilerbleches 13 in den Innenraum des Frittierbehälters 12 strömt. Eine zusätzliche Vergleichmäßigung des auf das Frittiergut 3 einwirkenden Fettstroms wird durch die Gitterstruktur des Bodens des Filterkorbes 4 sowie das Frittiergut 3 selbst, welches den Frittierkorb 4 voll ausfüllt, erreicht.

Das Verteilerelement 11 schließt seitlich umlaufend mit einer Schließfuge 14 ab, in die der Frittierkorb 4 mit seinem nach unten überstehenden Rand 15 passend eingesetzt wird. Das aus dem Verteilerelement 11 austretende heiße Frittierfett wird durch diese dicht schließende Verbindung zwischen Verteilerelement 11 und Frittierkorb 4 am seitlichen Entweichen gehindert und ausschließlich in den mit einem perforierten Boden versehenen Frittierkorb 4 gefördert. Das Fett durchströmt das Frittiergut 3 bzw. den Frittierkorb 4 gleichmäßig und in einer solchen Geschwindigkeit, dass es nach weniger als 10 sec, vorzugsweise 3 bis 6 sec, über den oberen Rand des Frittierbehälters 2 in den Fettsammelraum 5 zurückfließt. Der Frittierkorb 4 ist höher als der umgebende Frittierbehälter 2 und vollkommen mit Filtergewebe ausgekleidet. Das Fett fließt durch dieses Filtergewebe über den oberen Rand des Frittierbehälters 2 in den Fettsammelraum 5 ab.

Alle mitgeschwemmten Partikel des Frittiergutes werden dabei im Frittierkorb 4 zurückgehalten und bei Entfernung des Frittierkorbes 4 aus dem Frittierbehälter 2 mit dem fertigen Frittiergut 3 aus dem Fettkreislauf entfernt.

Das Frittierfett tritt dann vom Fettsammelraum 5 durch den Heizraum 6 und die Pumpe 9 wieder in die Förderleitung 10 sowie den daran anschließenden Frittierbehälter 2 ein, so dass der Fettkreislauf geschlossen wird.

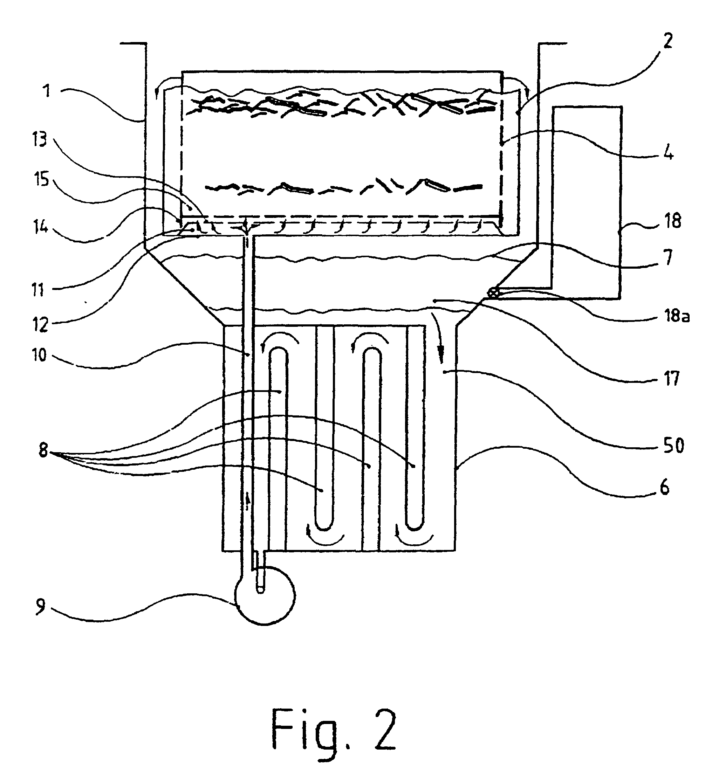

Fig. 2 zeigt eine weitere Ausführungsform der Frittiervorrichtung aus Fig. 1 mit einem zusätzlichen Vorratsbehälter 18, welcher eine zu dem Fettsammelraum 5 hin gerichtete Öffnung aufweist. In dem Fettsammelraum 5 muss stets so viel Fett vorhanden sein, dass die Heizkörper 8 vollständig mit Fett bedeckt sind. Hierzu ist es nötig, dass sich die unterhalb des Fettsammelbehälters anschließende Leitung 50 mit ihrer zum Fettsammelraum 5 gerichteten Öffnung immer unterhalb des Fettspiegels befindet. Dies wird dadurch sichergestellt, dass aus dem Vorratsbehälter 18 nach dem Prinzip der Vogeltränke oder durch ein Rohr mit Schwimmkugelverschluss 18a oder durch eine mechanische elektrische Schaltung oder durch eine elektronische sensorgesteuerte Schaltung (z.B. eines Magnetventils) der Mindestfüllstand 17 im Fettsammelraum 5 stets eingehalten wird (fällt der Fettspiegel unter den Mindestfüllstand 17, der zur vollständigen Bedeckung der Leitung 50 notwendig ist, so gibt der Verschluss 18a eine Öffnung des Vorratsbehälters 18 frei, so dass so viel Fett nachströmt, bis der Mindestfüllstand 17 wieder erreicht ist). Bei Erreichen des Füllstandes 17 wird der Verschluss dann wieder geschlossen, so dass kein Fett mehr aus dem Vorratsbehälter 18 in den Fettsammelraum 5 nachströmen kann.

Auf diese Weise wird eine Vorrichtung zur Verfügung gestellt, welche in Abhängigkeit vom Pegel des Fettes im Fettsammelraum 5 die Zuführung bzw. Abfuhr von Fett so steuert, dass ein zur Vermeidung von Lufteintrag in den Fettkreislauf vorgegebener Pegel des Fettes im Fettsammelraum 5 nicht unterschritten wird. Die anzustrebende Minimierung der Menge des Frittierfettes im Fettkreislauf der Fritteuse erfordert die Begrenzung aller Raumvolumina, welche von Fett durchströmt werden. Nur der Fettsammelraum 5 muss so groß sein, dass er nach dem Abschalten der Fritteuse das aus dem Kreislauf abfließende Fett aufnehmen kann. Dann ist der Höchststand 7 im Fettsammelraum 5 erreicht. Die Heizvorrichtung 6, 8 zum Erwärmen des Fettes ist so konzipiert, dass sie ein möglichst geringes Volumen des Fettes in möglichst schnellem Durchlauf auf die erforderliche Frittiertemperatur bringen kann. Außerdem werden zum Transport des Fettes Leitungen 10, 50 mit möglichst geringem Querschnitt verwendet. Außerdem ist es ein Merkmal des erfindungsgemäßen Verfahrens, dass das Fett auf kurzem Verbindungsweg von der Heizvorrichtung 6, 8 zum Frittiergut 3, hier über die Leitung 10, befördert wird. Das Verhältnis der Gesamtgewichte des Frittiergutes 3 und des zirkulierenden Fettes liegt für das am meisten verwendete Frittiergut Pommes frites vorzugsweise zwischen 1:1,5 und 1:6, besonders vorzugsweise zwischen 1:2 und 1:3,5. Die Durchströmung des im Fettkreislauf befindlichen Frittierbehälters 2 zur Aufnahme von Frittiergut findet vorzugsweise innerhalb von 3 bis 6 sec statt.

Es hat sich außerdem gezeigt, dass auch ein Verhältnis der Gesamtgewichte von Frittiergut zu Fett im Fettkreislauf bis hoch zu etwa 1:6 noch zu einer befriedigenden Mindestqualität des Frittierfettes auf Dauer führen kann, wenn qualitativ hochwertiges Frittierfett mit hoher thermischer Belastbarkeit benutzt wird und die im Fettkreislauf befindlichen Filter sehr feinmaschig sind. So ergab ein Gewichtsverhältnis Frittiergut zu Fett von 1:4,5 nach 90 Frittierungen nach dem kolorimetrischen Analyseverfahren "Fritest" der Firma Merck immer noch das Ergebnis von "noch gut", wenn sehr gutes Frittierfett benutzt wurde. Mit einer vergleichbaren Fettqualität wurde bei einem Gewichtsverhältnis Frittiergut zu Fett von 1:3 nach 160 Frittierungen sogar ein gesicherter Fritestwert von "gut" festgestellt.

Die Grenze des konstruktiv noch Erreichbaren liegt bei einem Gewichtsverhältnis von Frittiergut zu Fett von ca. 1:1,5. Aber auch bei anderen Verhältniszahlen wird im Sinne der vorliegenden Erfindung angestrebt, dass die im Kreislauf zirkulierende Menge des Fettes gerade (oder so knapp wie möglich) ausreicht, den Fettkreislauf während des Frittierens nicht unterbrechen zu lassen.

Wie bereits oben angedeutet, wird nach dem Ende jeder Frittierung die Drehrichtung der Pumpe 9, zum Beispiel durch Polumschaltung umgekehrt, bis das Frittierfett aus dem fertigen Frittiergut 3 im Frittierkorb 4 abgesaugt ist. Dann schalten Pumpe und Heizung ab, weil die Aufheizzeit der geringen Fettmenge so kurz ist, dass es nicht ständig warm gehalten werden muss, um trotzdem jederzeit die Frittiervorrichtung einsatzbereit zu halten.

Die Einstellung der Frittierzeit kann beispielsweise durch eine zu dem Umkehrelement gehörende einfache Zeitschaltuhr erfolgen, welche nach der eingestellten Frittierzeit zunächst die Drehrichtung der Pumpe 9 kurz umschaltet und dann Pumpe und Heizung abschaltet. Durch diese einfache Einrichtung wird der sehr teure automatische Korblift in Tauchfritteusen ersetzt.

Zum schnellen Aufheizen des Frittierfettes in der Fritteuse ist es zweckmäßig, die Dauer des Fettumlaufes zu verkürzen.

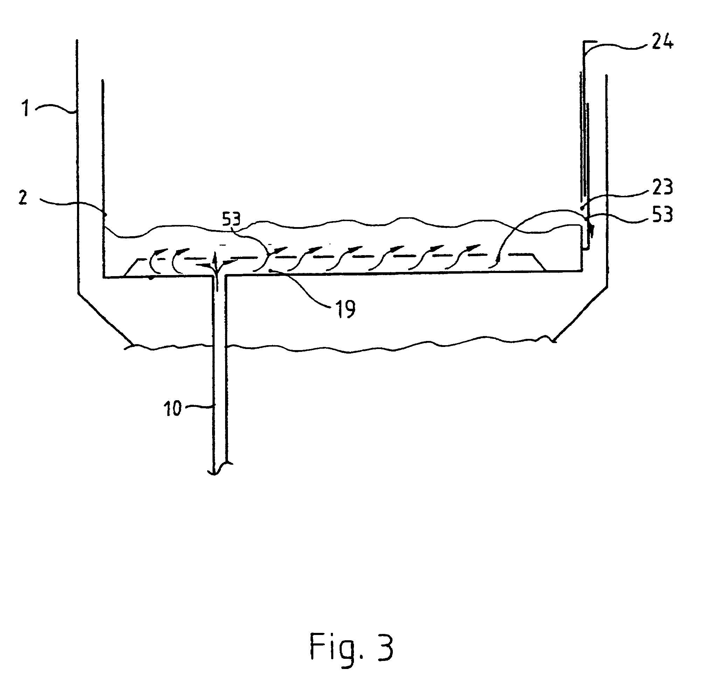

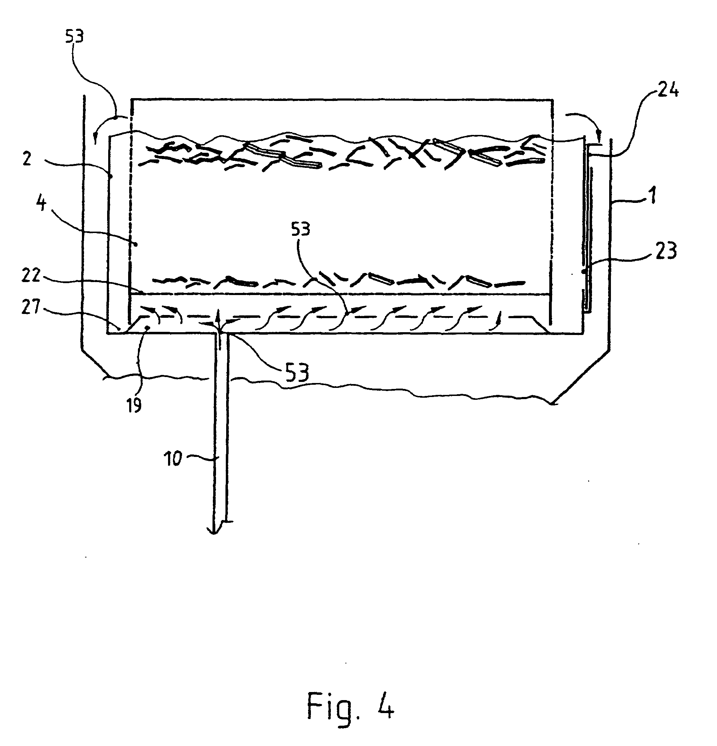

Fig. 3 zeigt ein Verteilerelement 19, welches den Boden des Frittierbehälters 2 bildet. Das Verteilerelement 19, welches sich an eine Förderleitung 10 anschließt, ist analog zu dem Verteilerelement 11 aus Fig. 1 aufgebaut. Zum schnellen Aufheizen des Frittierfettes ist die Öffnung 23, welche sich in der Seitenwand des Frittierbehälters 2 nahe über dem Boden des Frittierbehälters 2 befindet, durch Hochziehen des Schiebers 24 geöffnet und die Pumpe 9 eingeschaltet, um Fett in Richtung 53 zu fördern. Das in der Heizvorrichtung aufgeheizte Fett, welches durch die Förderleitung 10 in das Verteilerelement 19 und durch Öffnungen im Verteilerelement 19 in den für Frittiergut 3 vorgesehenen Raum des Frittierbehälters 2 gefördert wird, fließt in Richtung der Pfeile 53 durch die Öffnung 23 im Zwischenraum zwischen der Wand des Außenbehälters 1 und dem Frittierbehälter 2 in den darunter liegenden, im Fettkreislauf befindlichen, Fettsammelraum 5 zurück. Die Öffnung 23 wird während der Aufheizphase des Fettes zur Erzielung einer schnelleren Aufheizung geöffnet und während der Frittierphase des Fettes geschlossen. Sobald die Aufheizphase beendet ist, das heißt die gewünschte Frittiertemperatur erreicht ist, wird die Pumpe 9 abgestellt und der Schieber 24 nach unten geschoben (siehe Fig. 4), so dass die Öffnung 23 verschlossen ist.

Fig. 4 zeigt außerdem einen gefüllten Frittierkorb 4, der mit seinem nach unten überstehenden, rundum geschlossenen Rand 22 in die Schließfuge 27 des Verteilerelementes 19 so passend eingesetzt ist, dass das Frittierfett nicht seitlich entweichen kann (Analogie zu Fig. 1!), sondern verlustlos durch den durchlässigen Boden des Frittierkorbes 4 und das Frittiergut 3 nach oben steigt, nachdem die Öffnung 23 mit dem Schieber 24 geschlossen wurde. Der Frittierkorb 4 ist höher als der Frittierbehälter 2. Die Höhe des Frittierbehälters 2 bestimmt die Füllhöhe des Frittiergutstapels im Frittierkorb 4 (die Höhe der Oberkante des Frittierbehälters 2 soll nicht durch Frittiergut überschritten werden, siehe Fig. 4). Das Frittierfett fließt aus dem Frittiergutstapel durch die als Filter ausgeführten Wände des Frittierkorbes 4 über den oberen Rand des Frittierbehälters 2 in den Fettsammelraum 5, welcher unterhalb des Frittierbehälters 2 angeordnet ist.

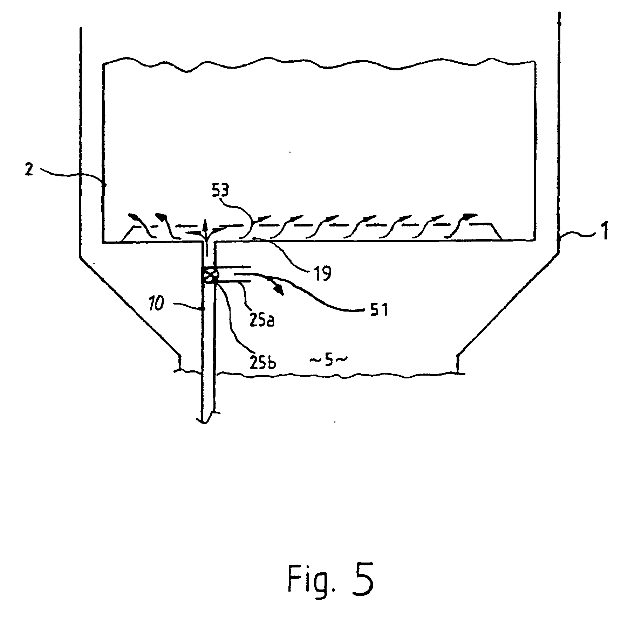

Fig. 5 zeigt eine weitere, besonders günstige Möglichkeit, den Fettkreislauf während der Aufheizphase zu verkürzen. Die Leitung 10 weist unterhalb des Eintritts in den Frittierbehälter 2 einen Abzweig 25a auf, der in den oberen Teil des Fettsammelraumes 5 mündet. An der Abzweigung ist ein Ventil 25b vorgesehen, welches den Fettstrom entweder in Richtung 53 in den Frittierbehälter 2, oder in Richtung 51 über den Abzweig 25a in den Fettsammelraum 5 umleitet. In Fig. 5 sind beide alternativen Flussrichtungen 53 und 51 gleichzeitig dargestellt. Die Ventilstellung ist abhängig von der aktuellen Fetttemperatur. Das Ventil 25b kann z.B. als elektronisch gesteuertes Magnetventil oder als Thermostatventil oder als anderes temperaturabhängig steuerbares Ventil nach dem Stand der Technik ausgeführt werden. Hat in der Aufheizphase das Fett noch nicht die nötige Frittiertemperatur (z.B. 180°C) erreicht, so wird der Fettstrom im kleinen Kreislauf über den Abzweig 25a in den Fettsammelraum 5 geleitet und erreicht von hier aus wieder die hier nicht dargestellte Heizvorrichtung 6, 8 und die Pumpe 9. In dieser Aufheizphase befindet sich keinerlei Fett im Frittierbehälter 2. Sobald das Fett die eingestellte Frittiertemperatur erreicht, schaltet das Ventil 25b den Fettstrom von Richtung 51 auf Richtung 53, so dass er den Frittierbehälter 2 erreicht und so der mehrfach beschriebene Frittierkreislauf beginnt. Mit dieser Vorrichtung wird auf vollautomatischem Wege verhindert, dass jemals in nicht ausreichend heißem Fett frittiert wird und es wird gleichzeitig erreicht, dass das Bedienungspersonal ohne Beachtung der aktuellen Fetttemperatur das Frittiergut trocken in den Behälter 2 einsetzten kann, um anschließend die Aufheiz- und Frittierphase zu starten, was eine zusätzliche Reduktion der Unfallgefahren durch Fettspritzer u.ä. zur Folge hat.

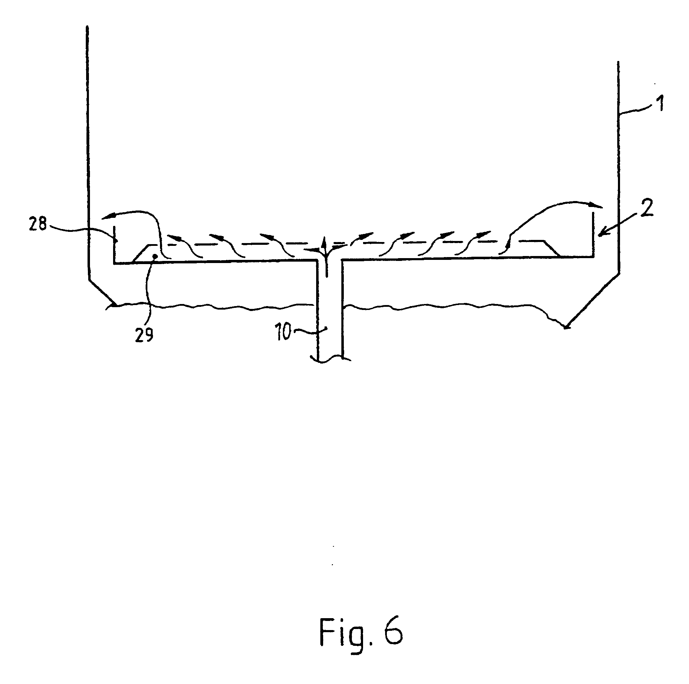

Fig. 6 zeigt eine weitere Ausführungsform einer erfindungsgemäßen Frittiervorrichtung. Hierin ist der Frittierbehälter 2 auf die sehr niedrige Wand 28 reduziert. Das Frittierfett fließt während der Aufheizphase sofort aus dem Verteilerelement 29, welches analog zu dem Verteilerelement 11 aus Fig. 1 aufgebaut ist, nach allen Seiten über die Wand 28 in den Kreislauf, das heißt in den unterhalb gelegenen Fettsammelraum 5 zurück. Hiermit erübrigt sich ein Öffnen bzw. Schließen eines Schiebers, wie etwa in Fig. 3 bzw. Fig. 4 gezeigt.

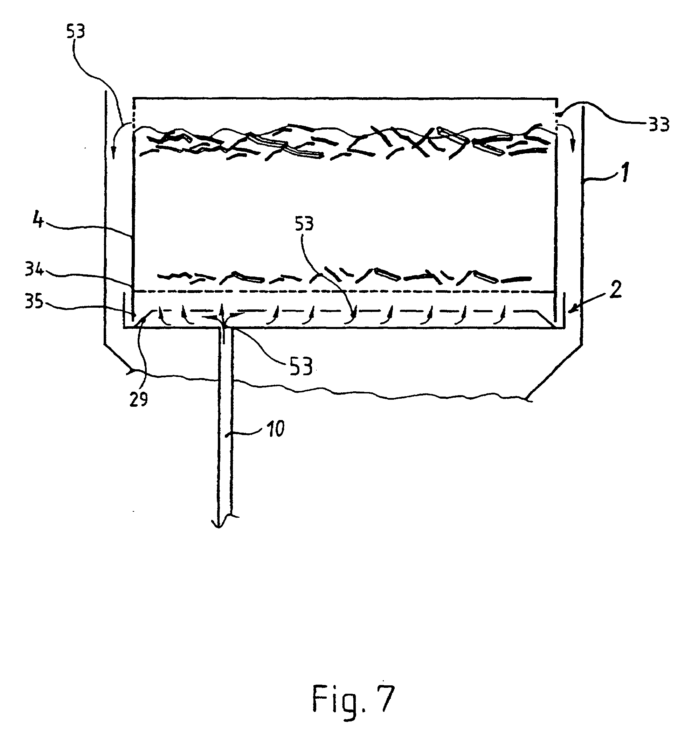

In Fig. 7 ist der gefüllte Frittierkorb 4 mit einer nach unten überstehenden geschlossenen Kante 34 abdichtend in die um das Verteilerelement 29 umlaufende Schließfuge 35 eingesetzt. Die Seitenwände des Frittierkorbes 4 sind im Gegensatz zu den zuvor dargestellten Ausführungsformen geschlossen und enden oben rundum mit einem Filterstreifen 33. Das heiße Fett strömt in der Frittierphase aus den Öffnungen des Verteilerelementes 29 in Richtungen 53 durch den durchlässigen Filterboden des Frittierkorbes 4 und läuft nach dem Durchströmen des Frittiergutes 3 durch den umlaufend angebrachten Filterstreifen 33 des Frittierkorbes 4 in den Fettsammelraum 5 zurück. Der Boden des Frittierkorbes 4 und der im Bereich der Oberkante herumlaufende perforierte Rand sind in der Weise gelocht bzw. aus Filtergeflecht gestaltet, dass vom Frittiergut separierte Partikel im Korb 4 zurückbleiben.

Alternativ zu der in Fig. 6 und 7 gezeigten Ausführungsform sind auch Vorrichtungen möglich, bei denen der Frittierkorb 4 durch seitliches Einschieben, beispielsweise in Klemmschienen, mit dem Verteilerelement 29 verbunden wird.

Der verkürzte Fettkreislauf während der Aufheizphase beschleunigt das Aufheizen des gesamten Fettinhaltes der Fritteuse so sehr, dass Pumpe und Heizung nach jeder Frittierung, insbesondere aber während der täglichen Zeiten geringer Nachfrage nach frittierten Speisen, ausgeschaltet sind. Das erfindungsgemäße Kreislauffrittierverfahren erspart daher nicht nur jegliches Austauschfett, sondern auch erhebliche Energiemengen im Vergleich zu konventionellen Tauchfritteusen.

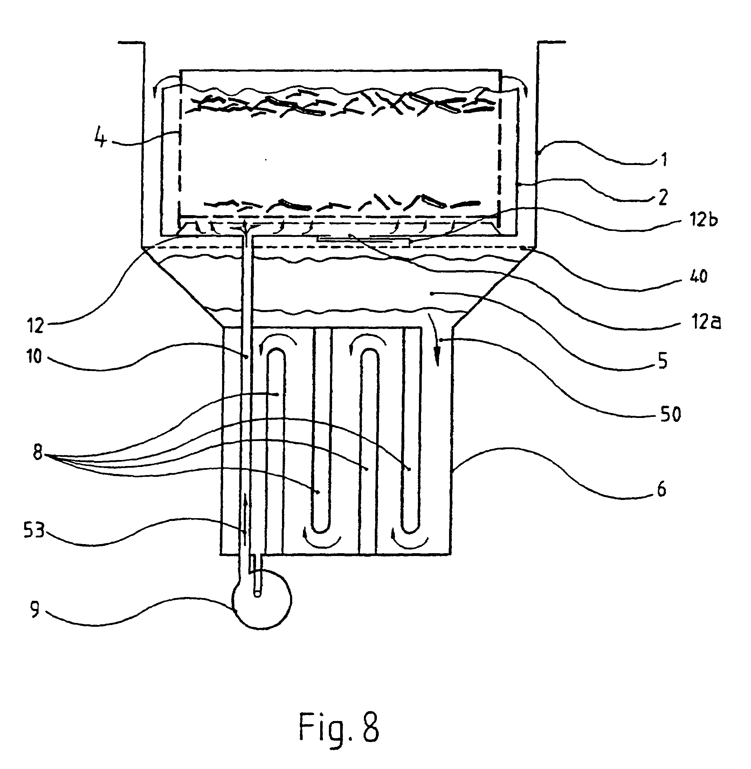

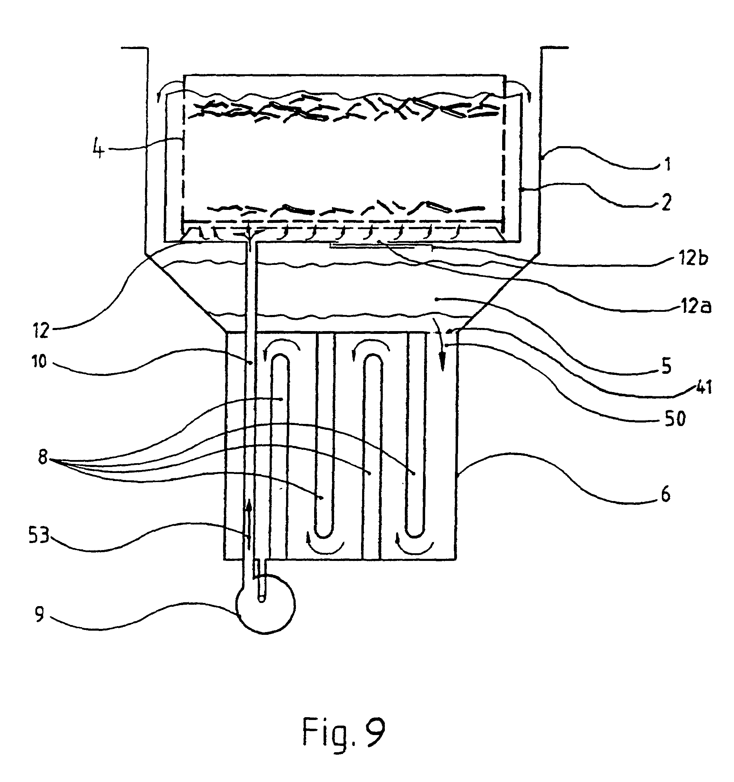

Fig. 8 und 9 zeigen zwei mögliche Positionen einer zusätzlichen Filterstation mit einem Feinstsieb. Die Filterstationen 40, 41, welche auswechselbare, bzw. zu reinigende Filterelemente aufnehmen, sind im Rücklauf des Frittierfettes, etwa über dem Fettsammelraum 5 unter dem Boden des Frittierbehälters 2 (Filterstation 40, Fig. 8), oder im Bereich der Schnittstelle von Fettsammelraum 5 zu der Leitung 50 (Filterstation 41, Fig. 9) angebracht. Die Filterstationen 40, 41 sind so angebracht, dass das mit Partikeln gefüllte Filtermaterial von außen leicht zu entnehmen ist und von Zeit zu Zeit ausgewechselt und gereinigt werden kann. Bei dieser Stromabwärtsfiltrierung kann nach dem Frittiervorgang auf das Abpumpen per Umkehrung der Pumprichtung der Pumpe 9 idealerweise verzichtet und das Fett bei Beendigung des Frittiervorganges durch eine zu öffnende Schleusenöffnung 12a im Boden 12 des Frittierbehälters 2 dem Eigengewicht folgend durch das Filterelement 40 (Fig. 8) in den Fettsammelraum 5 abgelassen werden. Bei Positionierung des Filterelementes 41 (Fig. 9) zwischen Fettsammelraum 5 und Heizvorrichtung 6,8, gelangt das Fett zunächst samt allen mittransportierten Partikeln in den Fettsammelraum 5 und wird beim Übertritt in die Leitung 50 gefiltert. Mit dieser Anordnung wird erreicht, dass das gesamte Fett in der Frittierphase *und* in der Ablassphase durch jeweils eine einzige Filterstation in der gleichen Richtung gefiltert wird. Zum Öffnen der Öffnung 12a kann ein Schieber 12b sowohl manuell als auch zum Beispiel durch eine elektrische Steuerung betätigt werden, oder es können andere Einrichtungen nach dem Stand der Technik eingesetzt werden. Wird bei Beendigung des Frittiervorganges auf die Umkehrung der Pumprichtung verzichtet, wie hier beschrieben, dann muss die Heizvorrichtung 6 auch nicht mehr stromaufwärts (bei Hauptpumprichtung 53) der Pumpe 9 angeordnet sein, was beim Rückwärtspumpen vorteilhaft ist, da die Heizvorrichtung 6 beim Rückwärtspumpen leicht trocken fallen könnte, wenn sie stromabwärts der Pumpe 9 angeordnet wäre. Die Filterstation 40, 41 kann durch einen Zyklon zur Abscheidung fester Partikel ergänzt werden.

Das erfindungsgemäße Verfahren kann auch angewendet werden, indem das heiße Frittierfett von oben über das Frittiergut 3 gegossen wird.

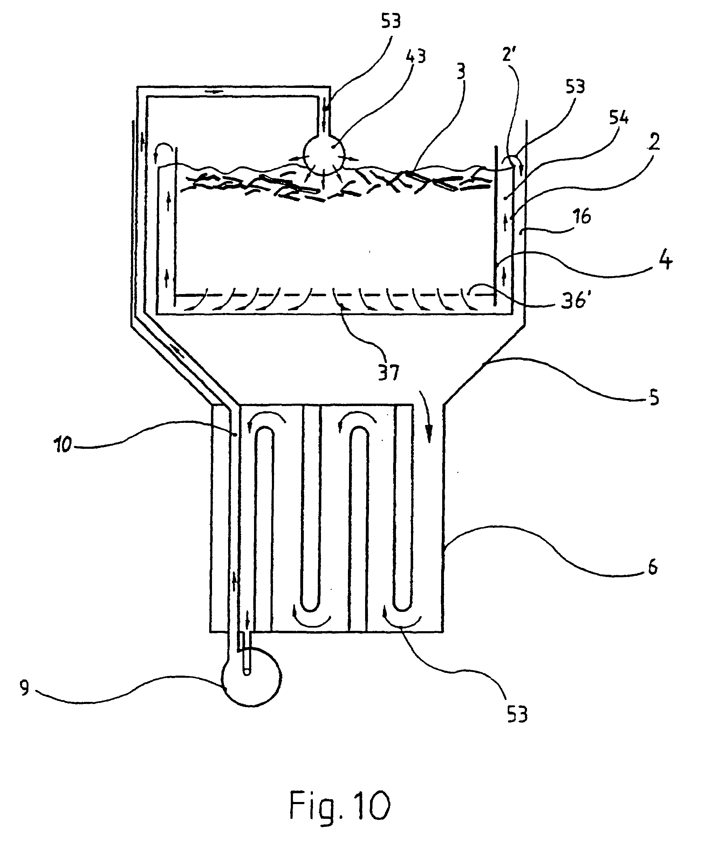

Fig. 10 zeigt ein Beispiel für eine solche Anwendung. Der Frittierkorb 4 ist im wesentlichen quaderförmig ausgeführt. Seine Seitenwände 36 sind geschlossen (d.h. flüssigkeitsdicht), während sein Boden 37 offen ist, der Boden 37 besteht beispielsweise aus Filtergewebe. Der Frittierkorb 4 mit dem Frittiergut 3 steht zum Frittieren in einem quaderförmigen Frittierbehälter 2, dessen Oberkante 2' niedriger ist als die des Frittierkorbes 4. Selbstverständlich können Frittierkorb 4 und Frittierbehälter 2 auch zumindest abschnittweise zylinderförmig ausgeführt sein. Der Frittierbehälter 2 ist gänzlich aus flüssigkeitsdichtem Material gefertigt Die in Fig. 10 gezeigte Frittiervorrichtung entspricht in bezug auf den Fettsammelraum 5, den Heizraum 6 sowie die Pumpe 9 vollständig den in den anderen Figuren gezeigten Frittiervorrichtungen, so dass auf eine detaillierte Beschreibung verzichtet wird. Das Frittierfett wird im Heizraum 6 aufgeheizt und von der Pumpe 9 durch das Förderrohr 10 nach oben in das Verteilerrohr 43 gepumpt. Das kugelförmig ausgeführte Verteilerrohr 43 hat über seine gesamte Ausdehnung gleichmäßig verteilte, nach unten gerichtete Öffnungen (also zu dem Frittierbehälter 2 hin), deren summierte Fläche etwa der inneren Querschnittsfläche des Förderrohres 10 entspricht. Zum Frittieren wird das Frittiergut zunächst nach dem Einschalten der Pumpe 9 mit dem heißen Frittierfett, welches in Richtung 53 aus dem Verteilerrohr 43 fließt, übergossen. Es fließt über das Frittiergut 3 durch den flüssigkeitsdurchlässigen Boden 37 des Frittierkorbes 4 und staut zunächst im Frittierkorb 4 und im Frittierbehälter 2 an, bis es durch einen umlaufenden, zwischen den Seitenwänden des Frittierbehälters 2 und dem Frittierkorb 4 befindlichen Spalt 54 in Flussrichtung 53 hochgepresst wird und über die Oberkante des Frittierbehälters 2 in den Fettsammelraum 5 abfließt. Das Verteilerrohr 43 befindet sich während des Frittierens so tief in dem Fettspiegel, dass seine Öffnungen in das gestaute Frittierfett eintauchen. Dadurch wird auch bei relativ wenigen Öffnungen für den Fettaustritt aus dem Verteilerrohr 43 erreicht, dass das ausströmende Fett durch den Fließwiderstand des angestauten Fettes und des darin lagernden Frittiergutes 3 in gleichmäßigem Strom nach unten abfließt. Die Leistung der Pumpe 9 ist so beschaffen, dass das Frittiergut 3 nach dem Einschalten in 4 bis 6 sec vollständig mit Fett bedeckt ist und bis zum Ende des Frittiervorganges ständig von aufgeheiztem Frittierfett durchflossen wird.

Die Frittierung wird durch Ausschalten der Pumpe 9 und der Heizvorrichtung 6,8 beendet. Damit das Fett aus dem fertigen Frittiergut abfließen kann, wird eine hier nicht noch einmal dargestellte, im Boden des Frittierbehälters 4 befindliche, Schleusenöffnung (12a, Fig. 8) geöffnet. Das Öffnen dieser Öffnung erfolgt analog zu Fig. 8 und 9. Die Leitung 10 für die Fettzuführung in den Frittierbehälter 2 endet innerhalb dessen Umgrenzung und in Höhe von dessen Oberkante. Hierbei erstreckt sich das mit Auslassöffnungen versehene Ende der Leitung horizontal in mindestens einer Richtung innerhalb des Behälters 2, wobei sich die Auslassöffnungen unterhalb der Oberkante des Frittierbehälters 2 befinden. Wie bereits in den zuvor gezeigten Ausführungsbeispielen ist der Boden des Frittierkorbes 4 so perforiert, dass vom Frittiergut 3 separierte Partikel bei der Entnahme des Frittierkorbes 4 aus dem Frittierbehälter 2 im Korb 4 zurückgehalten werden.

Fig. 11 zeigt einen Frittierkorb 4 mit geschlossenen Seitenwänden 61. Die Seitenwände 61 weisen umlaufend Öffnungen 62 auf, die mit einem Filtergewebe ausgestattet sind, welches geeignet ist, vom Frittiergut 3 separierte Partikel zurückzuhalten. Das Frittiergut 3 soll nicht über die Unterkante der Filteröffnungen 62 hinaus eingefüllt werden, damit es während des Frittiervorganges, wenn das Fett durch die Öffnungen 62 in Hauptstromrichtung 53 aus dem Korb 4 austritt, ständig mit Fett bedeckt ist. Die Füllhöhe des Frittiergutes 3 und damit die Höhe der Filteröffnungen 62 ist gerade so niedrig vorgesehen, dass auch bei heftigem Aufschäumen des Frittiergutes 3 während der Frittierphase kein Fett über den Oberrand des Frittierkorbes 4 übertreten kann, damit das gesamte zirkulierende Fett beim Durchtritt durch die Filteröffnungen 62 gefiltert wird. Unter dem weitmaschigen Drahtboden 68 ist ein Filterboden 63 vorgesehen, der entnehmbar arretiert wird, z.B. durch eine hier nicht gezeigte an drei Seiten umlaufende Schiene, in die der Filterboden 63 von der verbleibenden vierten Seite aus zum Austausch, bzw. zur Reinigung horizontal herausgezogen und wieder eingeschoben wird.

Alternativ sind auch andere Befestigungsmethoden, wie Klemmoder Schnappverschlüsse denkbar. Auch kann der Filterboden 63 im Korb 4 über dem Drahtboden 68 angebracht sein und von dort aus zum Auswechseln z.B. aus einem Schnappverschluss angehoben werden, jedoch muss dann das Filtermaterial so stabil sein, dass es ohne den mechanischen Schutz des Drahtbodens 68 nicht zerstört wird, z.B. durch unsachgemäße Handhabung von Fleischgabeln, etc. Damit der Frittierkorb 4 während der Frittierphase nicht aufschwimmt, wird er am Boden des Gehäuses 1 oder auf dem Verteilerboden 19 arretiert. Hierzu wird der Frittierkorb 4 zunächst mit der Leiste 66 in die an der Innenseite des Gehäuses 1 befestigte Fassung 64 eingesetzt und anschließend mit der Leiste 66a über eine Federstahlarretierung 65 nach unten in die arretierte Position gedrückt. Selbstverständlich sind auch andere Vorrichtungen, z.B. Klemm- oder Schnappverschlüsse nach dem Stand der Technik, möglich. Um zu vermeiden, dass in der Frittierphase Fett unter dem Korb 4 seitlich entweicht und in den Fettsammelraum 5 zurückströmt, ohne mit dem Frittiergut 3 in Kontakt gekommen zu sein, muss der Frittierkorb 4 gegen den Untergrund abgedichtet werden. Hierzu ist vorgesehen, den Boden des Gehäuses 1 oder, wie hier dargestellt, den Verteilerboden 19 mit einer umlaufenden Dichtungsschnur 67, z.B. aus PTFE, zu versehen, auf der der Frittierkorb 4 mittels oben beschriebener Arretiervorrichtung arretiert und abgedichtet wird.

Der in den anderen Figuren abgebildete Frittierbehälter (2) entfällt bei dieser Ausführung ganz.

## Patentansprüche

1. Verfahren zum Frittieren von Frittiergut (3) mit heißem Fett, welches mittels einer Pumpe (9) in einem Kreislauf geführt wird, in welchem das Fett erwärmt, mit dem Frittiergut (3) in Kontakt gebracht und gefiltert wird, wobei zur Minimierung der im Kreislauf zirkulierenden Menge des Fettes zu dessen Erwärmung auf die erforderliche Temperatur eine Heizvorrichtung (6, 8) mit minimalem Fettvolumen und maximaler Fettdurchlaufschnelligkeit verwendet wird und wobei zum Transport des Fettes Leitungen (10) mit mimimiertem Querschnitt und minimierter Länge verwendet werden,
**dadurch gekennzeichnet,**
**dass** das Verhältnis der Gesamtgewichte des Frittiergutes (3) und des zirkulierenden Fettes zwischen 1 : 1,5 und 1 : 6 liegt und dass das durch das Frittiergut (3) ausgetragene Fett fortlaufend durch entsprechende Mengen frischen Fettes ersetzt wird.

2. Verfahren nach Anspruch 1, **dadurch gekennzeichnet, dass** das Fett in der Heizvorrichtung (6, 8) besonders schonend, d.h. mit geringem Temperaturgradienten erhitzt wird, indem es auf maximierter Heizfläche in minimierter Schichtdicke erhitzt wird.

3. Verfahren nach Anspruch 1 oder 2, **dadurch gekennzeichnet, dass** ein zum Kreislauf gehörender Fettsammelraum (5) stets mindestens so gefüllt ist, dass sich eine stromabwärts an den Fettsammelraum (5) anschließende Leitung (50) zur Vermeidung von Lufteintrag im Anschlussbereich stets mit Fett überdeckt gehalten wird, indem über einen Schwimmer oder einen Sensor bei Unterschreitung einer definierten Fettmenge ein Zufluss von Frischfett geschaltet wird.

4. Verfahren nach einem der Ansprüche 1 bis 3, **dadurch gekennzeichnet, dass** das Fett auf dem kürzesten Verbindungsweg von der Heizvorrichtung (6, 8) zum Frittiergut (3) befördert wird.

5. Verfahren nach einem der vorhergehenden Ansprüche, **dadurch gekennzeichnet, dass** durch den fortlaufenden Ersatz des mit dem Frittiergut ausgetragenen, schadstoffhaltigen Fettes durch Frischfett eine gleichbleibende Fettqualität erreicht wird und das Aufkommen von zu entsorgendem Altfett verhindert wird.

6. Verfahren nach einem der vorhergehenden Ansprüche, **dadurch gekennzeichnet, dass** das Verhältnis der Gesamtgewichte des Frittiergutes (3) und des zirkulierenden Fettes zwischen 1 : 2 und 1 : 3,5 liegt.

7. Verfahren nach einem der vorhergehenden Ansprüche, **dadurch gekennzeichnet, dass** die Durchströmung mit Fett eines im Fettkreislauf befindlichen Behälters (2) zur Aufnahme von Frittiergut (3) innerhalb von 4 bis 6 sec stattfindet.

8. Vorrichtung zum Frittieren von Frittiergut (3) mit heißem Fett, mit einem Vorrichtungsgehäuse (1), wobei das Fett mittels einer Pumpe (9) in einem Kreislauf führbar ist, in welchem zumindest eine Heizvorrichtung (6, 8) und zumindest ein Behälter (2) für die Aufnahme des Frittiergutes (3) angeordnet sind,
**dadurch gekennzeichnet,**
**dass** die Fettaufnahmevolumina der Heizvorrichtung (6, 8), des Behälters (2) und der Verbindungsleitungen (10) zwischen diesen im Kreislauf auf der einen Seite und die vom Behälter (2) aufnehmbare Menge von Frittiergut (3) auf der anderen Seite jeweils so bemessen sind, dass das Verhältnis der Gesamtgewichte des Frittiergutes (3) und des zirkulierenden Fettes zwischen 1 : 1,5 und 1 : 6 liegt und dass eine in Abhängigkeit vom Pegel des Fettes gesteuerte Nachfülleinrichtung (18, 18a) für eine fortlaufende Zuführung von Frischfett vorgesehen ist.

9. Vorrichtung nach Anspruch 8, **dadurch gekennzeichnet, dass** der Behälter (2) für die Aufnahme des Frittiergutes (3) über der Heizvorrichtung (6, 8) angeordnet ist und dass sich zwischen dem Behälter (2) für die Aufnahme des Frittiergutes (3) und der Heizvorrichtung (6, 8) ein Fettsammelraum (5) befindet.

10. Vorrichtung nach Anspruch 8 oder 9, **dadurch gekennzeichnet, dass** die Pumpe (9) im Kreislauf stromaufwärts der Heizvorrichtung (6, 8) und stromaufwärts des Behälters (2) für die Aufnahme von Frittiergut (3) liegt.

11. Vorrichtung nach einem der Ansprüche 8 bis 10, **dadurch gekennzeichnet, dass** die Förderrichtung der Pumpe (9) umkehrbar ist und dass die Pumpe (9) ein Umkehrelement mit Zeitschaltuhr aufweist, welches nach einer vorgebbaren Frittierzeit die Förderrichtung der Pumpe (9) umkehrt.

12. Vorrichtung nach einem der Ansprüche 8 bis 11, **dadurch gekennzeichnet, dass** die Leitung (10) für die Zuführung des Fettes in den Boden (12) des Behälters (2) für die Aufnahme von Frittiergut (3) mündet und dass ein Verteilerelement (11) für eine möglichst gleichförmige Verteilung des Fettes in einem Raum zwischen dem Behälterboden (12) und dem Frittiergut (3) vorgesehen ist.

13. Vorrichtung nach Anspruch 12, **dadurch gekennzeichnet, dass** der Raum zwischen dem Behälterboden (12) und dem Frittiergut (3) auf der Seite des Frittiergutes (3) durch eine Lochplatte (13) begrenzt ist, deren Löcher so angeordnet und/oder dimensioniert sind, dass das Fett aus dem Raum gleichmäßig über die Fläche der Lochplatte (13) verteilt in das Frittiergut (3) strömt.

14. Vorrichtung nach einem der Ansprüche 8 bis 13, **dadurch gekennzeichnet, dass** der Behälter (2) oben offen ist und dass ein in den Behälter (2) einsetzbarer Korb (4) für die Aufnahme des Frittiergutes (3) vorgesehen ist.

15. Vorrichtung nach Anspruch 14, **dadurch gekennzeichnet, dass** die Oberkante des Korbes (4) über die Oberkante des oben offenen Behälters (2) hinausragt und der Korb (4) zumindest im über die Oberkante des Behälters (2) hinausragenden Bereich solche Löcher aufweist, dass diese vom Frittiergut (3) separierte Partikel im Korb (4) zurückhalten.

16. Vorrichtung nach einem der Ansprüche 8 bis 15, **dadurch gekennzeichnet, dass** in der Seitenwand des Behälters (2) für die Aufnahme von Frittiergut (3) in Bodennähe eine Öffnung (23) für die Rückführung des Fettes zur Heizvorrichtung (6, 8) vorgesehen ist, welche während der Aufheizphase des Fettes geöffnet und während der Frittierphase geschlossen ist.

17. Vorrichtung nach einem der Ansprüche 8 bis 13, **dadurch gekennzeichnet, dass** der Behälter (2) für die Aufnahme von Frittiergut (3) aus einem Basisteil mit geringer Höhe und einem in das Basisteil flüssigkeitsdicht einsetzbaren Einsatzteil (30) mit einer für die Aufnahme des Frittiergutes (3) ausreichenden Höhe besteht, wobei das Einsatzteil (30) während der Aufheizphase für das Fett abgenommen und während der Frittierphase eingesetzt ist.

18. Vorrichtung nach Anspruch 17, **dadurch gekennzeichnet, dass** das Einsatzteil (30) als im wesentlichen gerader oder zumindest abschnittsweise zylinderförmiger Frittierkorb ausgeführt ist, der mit einer nach unten überstehenden Kante (34) in eine korrespondierende Aufnehmung des Basisteils flüssigkeitsdicht einsetzbar ist, wobei die Seitenwände des Ensatzteils (30) geschlossen sind und sein Boden sowie der Bereich der Oberkante seiner Seitenwände gelocht ist oder aus Filtergeflecht besteht.

19. Vorrichtung nach einem der Ansprüche 8 bis 14 **dadurch gekennzeichnet, dass** ein Frittierkorb (4) mit geschlossenen Seitenwänden (61) verwendet wird, welche in der vorgesehenen Füllhöhe mit Frittiergut (3) umlaufend Filteröffnungen (62) aufweisen und unter dessen weitmaschigem Drahtboden (68) eine die gesamte Grundfläche ausfüllende Filterfläche (63) angebracht ist.

20. Vorrichtung nach Anspruch 19, **dadurch gekennzeichnet, dass** die Filterfläche (63) über oder unter dem Drahtboden (68) mittels einer Einschubleiste an drei Seiten arretierbar ist und zur Reinigung oder zum Austausch an einer Seite herausziehbar ist.

21. Vorrichtung nach Anspruch 19 oder 20, **dadurch gekennzeichnet, dass** der Frittierkorb (4) an zwei gegenüberliegenden Seiten jeweils eine Leiste (66, 66a) aufweist, wobei zur Arretierung des Korbes (60) auf dem Boden des Vorrichtungsgehäuses (1) oder auf einem Verteilerboden (19) eine erste Leiste (66) in eine Fassung (64) und eine zweite Leiste (66a) unter eine Arretiervorrichtung (65), die vorzugsweise aus Federstahl besteht, passt.

22. Vorrichtung nach einem der Ansprüche 19 bis 21, **dadurch gekennzeichnet, dass** der Boden des Gehäuses (1) oder der Verteilerboden (19) eine umlaufende Dichtungsschnur (67) aufweist, auf welcher der Frittierkorb (4) mittels der Arretiermittel (64, 65, 66, 66a) arretiert und abgedichtet halterbar ist.

23. Vorrichtung nach einem der Ansprüche 8 bis 10, **dadurch gekennzeichnet, dass** die Leitung (10) für die Zuführung von Fett in den Behälter (2) für die Aufnahme von Frittiergut (3) innerhalb von dessen Umgrenzung und in Höhe von dessen Oberkante (2') endet und an diesem Ende (43) mit Auslassöffnungen versehen ist.

24. Vorrichtung nach Anspruch 23, **dadurch gekennzeichnet, dass** das mit Auslassöffnungen versehene Ende (43) der Leitung (10) sich horizontal in mindestens einer Richtung innerhalb des Behälters (2) erstreckt.

25. Vorrichtung nach Anspruch 23 oder 24, **dadurch gekennzeichnet, dass** die Auslassöffnungen sich unterhalb der Oberkante (2') des Behälters (2) befinden.

26. Vorrichtung nach einem der Ansprüche 23 bis 25, **dadurch gekennzeichnet, dass** ein in den Behälter (2) einsetzbarer Korb (4), dessen Seitenwände geschlossen sind und im eingesetzten Zustand über die Oberkante des Behälters (2) hinausragen und dessen Boden mit Öffnungen (36') für den Durchlass des Fettes versehen ist, für die Aufnahme des Frittiergutes (3) vorgesehen ist.

27. Vorrichtung nach Anspruch 26, **dadurch gekennzeichnet, dass** die Öffnungen(36') im Boden des Korbes (4) so dimensioniert sind, dass sie vom Frittiergut (3) separierte Partikel im Korb (36) zurückhalten.

28. Vorrichtung nach einem der Ansprüche 23 bis 27, **dadurch gekennzeichnet, dass** zwischen den Seitenwänden des eingesetzten Korbes (4) und dem Behälter (2) ein Spalt (54) für die Weiterleitung des durch die Öffnungen (36') aus dem Boden des Korbes (4) austretenden Fettes vorgesehen ist.

29. Vorrichtung nach einem der Ansprüche 8 bis 28, **dadurch gekennzeichnet, dass** das Vorrichtungsgehäuse (1) mit der Seitenwand des Behälters (2) für die Aufnahme des Frittiergutes (3) einen Spalt (16) für die Weiterleitung des aus dem Behälter (2) über dessen Oberkante austretenden Fettes zu der Heizvorrichtung (6, 8) bildet.

30. Vorrichtung nach einem der Ansprüche 8 bis 29, **dadurch gekennzeichnet, dass** eine Öffnung (12a) im Boden (12) des Frittierbehälters (2) vorgesehen ist, die während des Frittiervorganges geschlossen ist und nach dem Frittiervorgang mittels eines Schiebers (12b) manuell oder mittels einer Betätigungseinrichtung zum Ablassen des Fettes in Öffnungsstellung überführbar ist.

31. Vorrichtung nach einem der Ansprüche 8 bis 30, **dadurch gekennzeichnet, dass** eine Filterstation (40) vorgesehen ist, die stromabwärts unter dem Frittierbehälter (2) im oberen Teil des Fettsammelraums (5) in der Weise angeordnet ist, dass der gesamte Fettstrom während des Frittiervorganges oder beim Ablassen des Fettes den Filter (40) passieren muss.

32. Vorrichtung nach Anspruch 31, **dadurch gekennzeichnet, dass** alternativ eine Filterstation (41) zwischen Fettsammelraum (5) und Heizvorrichtung (6, 8) angeordnet ist.

33. Vorrichtung nach einem der Ansprüche 8 bis 32, **dadurch gekennzeichnet, dass** in der Verbindungsleitung (10) ein Abzweig (25a) vorgesehen ist, der in den oberen Bereich des Fettsammelraumes (5) mündet und der durch ein temperaturgesteuertes Magnetventil oder ein Thermostatventil (25b) so freigebbar ist, dass der Fettstrom in kleinem Kreislauf in Flussrichtung (51) direkt - unter Umgehung der Flussrichtung (53) durch den Frittierbehälter (2)- in den Fettsammelraum (5) geleitet wird, solange das Fett noch nicht Frittiertemperatur erreicht hat, und der absperrbar ist, sobald das Fett Frittiertemperatur erreicht hat, womit Flussrichtung (51) unterbunden und Flussrichtung (53) durch den Behälter (2) eröffnet ist.

34. Vorrichtung nach einem der Ansprüche 8 bis 33, **dadurch gekennzeichnet, dass** die Heizvorrichtung Flächenheizkörper (8) aufweist, die in geringem gegenseitigen Abstand parallel zueinander so angeordnet sind, dass sie einen mäander- oder wellenförmigen Strömungspfad für das hindurchströmende Fett bilden.

35. Vorrichtung nach einem der Ansprüche 9 bis 34, **dadurch gekennzeichnet, dass** die Nachfülleinrichtung (18, 18a) für die Zuführung von Frischfett in Abhängigkeit vom Pegel des Fettes im Fettsammelraum (5) steuerbar ist und dass das Frischfett in den Fettsammelraum (5) zuführbar ist, wobei die Nachfülleinrichtung (18, 18a) die Zuführung von Frischfett so steuert, dass zur Vermeidung von Lufteintrag in den Fettkreislauf ein vorgegebener Pegel nicht unterschritten wird.

36. Vorrichtung nach einem der Ansprüche 8 bis 35, **dadurch gekennzeichnet, dass** zum Ablassen des Fettes zumindest an der tiefsten Stelle des Kreislaufes ein Ablaufhahn vorgesehen ist.

## Claims

1. Method for deep-frying products (3) to be deep-fried in hot fat, which fat by means of a pump (9) is carried in a cycle, in which cycle the fat is heated up, brought into contact with the products(3) to be deep-fried, and filtered, wherein for minimizing the quantity of fat circulating in the cycle a heating device (6, 8) with a minimal fat volume and a maximal fat run-through velocity is used to heat up the fat, and wherein pipes (10) with a minimized cross-section and a minimized length are used for transporting the fat,
**characterised in**
**that** the ratio of the total weights of the products (3) to be deep-fried and the circulating fat is between 1 : 1.5 and 1 : 6, and that the fat that is discharged along with the products (3) that have been deep-fried is constantly replaced with corresponding quantities of fresh fat.

2. Method according to claim 1, **characterised in that** the fat in the heating device (6, 8) is heated especially gently, i.e. with low thermal gradients, by heating it on a maximized heating surface in a minimized layer thickness.

3. Method according to claim 1 or 2, **characterised in that** a fat collection zone (5), belonging to the cycle, always accommodates the minimum quantity of fat needed to ensure that a pipe (50) that is connected upstream to the fat collection zone (5) is always kept covered with fat, so as to avoid air getting into the connection area, wherein an inflow of fresh fat is activated by a float or a sensor when a defined quantity of fat is undershot.

4. Method according to one of claims 1 to 3, **characterised in that** the fat is fed along the shortest possible connecting path from the heating device (6, 8) to the products (3) to be deep-fried.

5. Method according to one of the preceding claims, **characterised in that** a consistent quality of fat is achieved through the ongoing replacement of the polluted fat, that is discharged along with the deep-fried products, with fresh fat, and that the emergence of old fat that needs to be disposed of, is completely avoided.

6. Method according to one of the preceding claims, **characterised in that** the ratio of the total weights of the products (3) to be deep-fried and the circulating fat lies between 1 : 2 and 1 : 3.5.

7. Method according to one of the preceding claims, **characterised in that** the fat flows through a vat (2), accommodating the products (3) to be deep-fried, which vat is located in the fat cycle, within 4 to 6 seconds.

8. Device for deep-frying products (3) to be deep-fried in hot fat, with a device casing (1), wherein the fat can be fed by means of a pump (9) in a cycle, in which there is at least one heating device (6, 8) and at least one vat (2) to accommodate the products (3) to be deep-fried,
**characterised in**
**that** the fat accommodation volumes of the heating device (6, 8), of the vat (2) and of the connecting pipes (10) between them on the one hand, and the quantity of products (3) to be deep-fried that can be accommodated in the vat (2)on the other hand, are each measured such that the ratio of the total weights of the products (3) to be deep-fried and the circulating fat is between 1 : 1.5 and 1 : 6, and that there is a refilling device (18, 18a) for continously supplying fresh fat, which device is controlled in dependence on the fat level.

9. Device according to claim 8, **characterised in that** the vat (2) for accommodating the products (3) to be deep-fried is located above the heating device (6, 8), and that there is a fat collection zone (5) between the vat (2) for accommodating the products (3) to be deep-fried and the heating device (6, 8).

10. Device according to claim 8 or 9, **characterised in that** the pump (9) in the cycle lies upstream from the heating device (6, 8) and upstream from the vat (2) for accommodating the products (3) to be deep-fried

11. Device according to one of claims 8 to 10, **characterised in that** the feed direction of the pump (9) can be reversed, and that the pump (9) has a reversing device with a time switch, which reverses the feed direction of the pump (9) after a pre-specified frying time.

12. Device according to one of claims 8 to 11, **characterised in that** the pipe (10) for feeding the fat leads into the bottom (12) of the vat (2) for accommodating the products (3) to be deep-fried, and that there is a distribution device (11) for an even as possible distribution of the fat in a space between the bottom of the vat (12) and the products (3) to be deep-fried.

13. Device according to claim 12, **characterised in that** the area between the bottom of the vat (12) and the products (3) to be deep-fried is limited on the side of the products (3) to be deep-fried by means of a swage block (13), whose holes are arranged and/or dimensioned in such a way that fat flows out of the space into the products (3) to be deep-fried evenly distributed over the surface of the swage block (13).

14. Device according to one of claims 8 to 13, **characterised in that** the top of the vat (2) is open, and that there is a basket (4) for accommodating the products (3) to be deep-fried, which basket can be inserted into the vat (2).

15. Device according to claim 14, **characterised in that** the upper edge of the basket (4) protrudes out over the upper edge of the vat (2), which vat is open at the top, and that, at least in the area protruding out over the upper edge of the vat (2), the basket (4) has holes, which keep back the particles that have separated from the deep-fried products (3) in the basket (4).

16. Device according to one of claims 8 to 15, **characterised in that**, in the side wall of the vat (2) for accommodating the products (3) to be deep-fried, close to the bottom of the vat there is an opening (23) to feed the fat back to the heating device (6, 8), which opening is open whilst the fat is being heated, and closed whilst frying is taking place.

17. Device according to one of claims 8 to 13, **characterised in that** the vat (2) for accommodating the products (3) to be deep-fried consists of a basic part with little height and of a leak proof part (30) that can be inserted inside the basic part and is tall enough to accommodate the products (3) to be deep-fried, wherein the insertable part (30) is removed for the heating-up phase and inserted for the frying stage.

18. Device according to claim 17, **characterised in that** the insertable part (30) is designed as a deep-frying basket, which is essentially straight or, at least in sections, in the shape of a cylinder, which has a downwards extending edge (34), which can be inserted inside a corresponding gap in the basic part to form a leak proof seal, wherein the side walls of the insertable part (30) are closed and the bottom as well as the area close to the upper edge of its side walls are perforated or consist of filter netting.

19. Device according to one of claims 8 to 14, **characterised in that** a deep-frying basket (4) is used, which has closed side walls (61) with filter openings (62) all around at the level specified for maximum filling with the products (3) to be deep-fried, and has a wide-meshed wire bottom, under which there is a filtering surface (63) taking up the entire surface area.

20. Device according to claim 19, **characterised in that** the filtering surface (63) can be locked in place on three sides above or below the wire bottom (68) by means of a slide-in cleat, and can be removed on one side for cleaning or replacement.

21. Device according to claims 19 or 20, **characterised in that** the deep-frying basket (4) has a slide-in cleat (66, 66a) on each of two facing walls, wherein, in order to lock the basket (4) onto the bottom of the device casing (1) or onto a distributor bottom (19), one of the cleats (66) fits into a holder (64), and the other cleat (66a) fits into a locking device (65), which is preferably made of spring steel.

22. Device according to one of claims 19 to 21, **characterised in that** the bottom of the casing (1) or of the distributor (19) has a sealing band (67) all the way round, onto which the deep-frying basket (4) can be locked in place and kept sealed by means of the locking devices (64, 65, 66, 66a).

23. Device according to one of claims 8 to 10, **characterised in that** the pipe (10) , which feeds the fat into the vat (2) for accommodating the products (3) to be deep-fried, ends within the confines of the deep-frying vat (2) and at the height of its upper edge (2'), and that there are outlets at this end (43).

24. Device according to claim 23, **characterised in that** the end of the pipe (10) that is equipped with outlets (43) extends horizontally in at least one direction inside the vat (2).

25. Device according to claim 23 or 24, **characterised in that** the outlets are below the upper edge (2') of the vat (2).

26. Device according to one of claims 23 to 25, **characterised in that** there is a basket (4) to accommodate the products (3) to be deep-fried, which basket can be inserted into the vat (2), the side walls of which basket are closed and, when the basket (4) is inserted, extend beyond the upper edge of the vat (2), and the bottom of which basket has openings (36') to drain off the fat.

27. Device according to claim 26, **characterised in that** the openings (36') in the bottom of the basket (4) are dimensioned such that the particles in the basket (4) that have separated from the deep-fried products (3) are retained in the basket (36).

28. Device according to one of claims 23 to 27, **characterised in that** between the side walls of the inserted basket (4) and the vat (2) there is a gap (54) to carry away the fat issuing from the bottom of the basket (4) through the openings (36').

29. Device according to one of claims 8 to 28, **characterised in that** the device casing (1) forms a gap (16) with the side walls of the vat (2) for accommodating the products (3) to be deep-fried, to carry away the fat issuing from the vat (2) over the upper edge of the vat (2) to the heating device (6, 8).

30. Device according to one of claims 8 to 29, **characterised in that** there is an opening (12a) in the bottom (12) of the deep-frying vat (2), which opening is closed during the deep-frying process and, at the end of the deep-frying process, can be transferred to the open position either manually by means of a slide-in cleat (12b) or by means of an activating device, in order to drain off the fat.

31. Device according to one of claims 8 to 30, **characterised in that** there is a filtering station (40), which is located downstream below the deep-frying vat (2) in the upper region of the fat collection zone (5), such that the entire stream of fat must pass through the filter (40) during the deep-frying phase or when the fat is being drained off.

32. Device according to claim 31, **characterised in that**, alternatively, there is a filtering station (41) between the fat collection zone (5) and the heating device (6, 8).

33. Device according to one of claims 8 to 32, **characterised in that** there is a branch (25a) in the connecting pipe (10), which branch opens out into the upper region of the fat collection zone (5) and can be released by means of a temperature-controlled magnetic valve or a thermostatic valve (25b), so that the stream of fat can be fed in a small cycle in the direction of flow (51) directly to the fat collection zone (5) - and bypass the direction of flow (53) through the deep-frying vat (2) - provided the fat has not yet reached the deep-frying temperature, and which branch can be blocked off as soon as the fat has reached the deep-frying temperature, wherein the direction of flow (51) is closed off and the direction of flow (53) through the vat (2) is opened up.

34. Device according to one of claims 8 to 33, **characterised in that** the heating device has panel heaters (8), which are so arranged in parallel at a short distance from each other, that they form a meandering or wavy flow path for the fat that is flowing through.

35. Device according to one of claims 9 to 34, **characterised in that** the refilling device (18, 18a) to feed fresh fat can be controlled in dependence on the fat level in the fat collection zone (5), and that the fresh fat can be fed into the fat collection zone (5), wherein the refilling device (18, 18a) controls the inflow of fresh fat such that, in order to prevent air getting into the fat cycle, a predefined level is always maintained.

36. Device according to one of claims 8 to 35, **characterised in that**, to drain off the fat, there is an outlet cock at least at the deepest point of the cycle.

## Revendications

1. Procédé de friture de produits à frire (3) avec de la graisse très chaude qui est conduite à l'aide d'une pompe (9) dans un circuit dans lequel la graisse est échauffée, mise en contact avec le produit à frire (3) et filtrée, étant donné que, en vu4e de minimiser la quantité de graisse circulant dans le circuit pour l'échauffement de cette dernière la température nécessaire, on utilise un dispositif de chauffage (6, 8) avec volume minimal de graisse et vitesse de passage de graisse maximale, et étant donné que qu'on utilise pour le transport de la graisse des conduites (10) avec une section minimisée et une longueur minimisée,
**caractérisé par le fait que**
le rapport entre le poids total du produit à frire (3) et celui de la graisse circulante est situé entre 1:1,5 et 1:6, et que la graisse consommée par le produit à frire (3) est continuellement remplacée par des quantités correspondantes de graisse fraîche.

2. Procédé conformément à la revendication 1, **caractérisé par le fait que** la graisse est échauffée dans le dispositif de chauffage (6, 8) de manière particulièrement douce, c'est-à-dire avec un faible gradient de température, ce en étant échauffée sur une surface de chauffage maximisée sur une épaisseur de couche minimisée.

3. Procédé conformément à la revendication 1 ou 2, **caractérisé par le fait qu'**un compartiment de collecte de graisse (5) appartenant au circuit est en permanence au moins rempli de manière à ce qu'une conduite (50) raccordée en aval du compartiment de collecte de graisse (5) soit en permanence rempli de graisse afin d'éviter l'infiltration de l'air dans la zone de raccordement, ce qui est réalisé **par le fait qu'**un afflux de graisse fraîche est déclenché par un flotteur ou un capteur dès qu'une quantité de graisse définie au préalable est sous-dépassée.

4. Procédé conformément à l'une des revendications 1 à 3, **caractérisé par le fait que** la graisse est transportée par la voie de liaison la plus courte du dispositif de chauffage (6, 8) au produit à frire (3).

5. Procédé conformément à l'une des revendications précédentes, **caractérisé par le fait que**, par le remplacement continu de la graisse, qui contient des substances nocives, consommée par le produit à frire par de la graisse fraîche, on obtient une qualité de graisse constante et empêche la production de graisse usée à éliminer.

6. Procédé conformément à l'une des revendications précédentes, **caractérisé par le fait que** le rapport entre le poids total du produit à frire (3) et celui de la graisse circulante est situé entre 1:2 et 1:3,5.

7. Procédé conformément à l'une des revendications précédentes, **caractérisé par le fait qu'**un récipient (2) se trouvant dans le circuit de graisse et destiné à recueillir le produit à frire (3) est traversé par de la graisse en l'espace de 4 à 6 secondes.

8. Dispositif pour la friture de produit à frire (3) avec de la graisse très chaude avec un boîtier de dispositif (1), étant donné que la graisse peut être conduite dans un circuit au moyen d'une pompe, circuit dans lequel sont agencés au moins un dispositif de chauffage (6, 8) et au moins un récipient (2) destiné à recueillir le produit à frire (3),
**caractérisé par le fait que**
les volumes d'absorption de graisse du dispositif de chauffage (6, 8) et des conduites de jonction (10) entre ces dernières dans le circuit d'une part et la quantité de produit à frire (3) que peut recueillir le récipient (2) d'autre part sont dimensionnés de manière à ce que le rapport entre le poids total du produit à frire (3) et celui de la graisse circulante est situé entre 1:1,5 et 1:6, et qu'un dispositif de recharge (18, 18a) commandée en fonction du niveau de graisse est prévu pour garantir un afflux continu de graisse fraîche.

9. Dispositif conformément à la revendication 8, **caractérisé par le fait que** le récipient (2) destiné à recueillir le produit à frire (3) est disposé au-dessus du dispositif de chauffage (6, 8), et que qu'un compartiment de collecte de graisse (5) se trouve entre le récipient (2) et le dispositif de chauffage (6, 8).

10. Dispositif conformément à la revendication 8 ou 9, **caractérisé par le fait que** la pompe (9) est située, dans le circuit, en amont du dispositif de chauffage (6, 8) et en amont du récipient (2) destiné à recueillir le produit à frire (3).

11. Dispositif conformément à l'une des revendications 8 à 10, **caractérisé par le fait que** le sens de refoulement de la pompe (9) est réversible, et que la pompe (9) comporte un élément d'inversion à minuteur qui inverse le sens de refoulement de la pompe (9) après un temps de friture programmable au préalable.

12. Dispositif conformément à l'une des revendications 8 à 11, **caractérisé par le fait que** la conduite (10) de transport de la graisse débouche dans le fond (12) du récipient (2) destiné à recueillir le produit à frire (3), et qu'un élément de distribution (11) est prévu pour assurer une distribution aussi uniforme que possible de la graisse dans un compartiment situé entre le fond du récipient (12) et le produit à frire (3).

13. Dispositif conformément à la revendication 12, **caractérisé par le fait que** le compartiment situé entre le fond du récipient (12) et le produit à frire (3) est limité côté produit à frire (3) par une plaque perforée (13) dont les trous sont disposés et/ou dimensionnés de manière à ce que la graisse s'écoule, uniformément répartie sur la surface de la plaque perforée, du compartiment dans le produit à frire (3).

14. Dispositif conformément à l'une des revendications 8 à 13, **caractérisé par le fait que** le récipient (2) est ouvert en haut et qu'un panier (4) pouvant être installé dans le récipient (2) est prévu pour la collecte du produit à frire (3).

15. Dispositif conformément à la revendication 14, **caractérisé par le fait que** l'arête supérieure du panier (4) déborde de l'arête supérieure du récipient (2) ouvert en haut, et que le panier (4) comporte au moins dans la zone débordant de l'arête supérieure du récipient (2) des trous qui retiennent dans le panier (4) les particules séparées du produit à frire (3).

16. Dispositif conformément à l'une des revendications 8 à 15, **caractérisé par le fait que**, dans la paroi latérale du récipient (2) destiné à recueillir le produit à frire (3), un orifice (23) est prévu à proximité du fond pour le retour de la graisse au dispositif de chauffage (6, 8), trou qui est ouvert pendant la phase d'échauffement de la graisse et fermé pendant la phase de friture.

17. Dispositif conformément à l'une des revendications 8 à 13, **caractérisé par le fait que** le récipient (2) destiné à recueillir le produit à frire (3) se compose d'une partie de base de petite hauteur et d'un insert (30) de hauteur suffisante pouvant être installé de manière étanche dans la partie de base, étant donné que l'insert (30) est enlevé pendant la phase d'échauffement de la graisse et installé pendant la phase de friture.

18. Dispositif conformément à la revendication 17, **caractérisé par le fait que** l'insert (30) est construite comme panier de friture de forme essentiellement droite ou au moins cylindrique par secteurs pouvant être installé de manière étanche avec une arête (34) débordant vers le bas dans un logement correspondant de la partie de base, étant donné que les parois latérales de l'insert (30) sont fermées et que le fond de ce dernier ainsi que l'arête supérieure de ses parois latérales sont perforés ou se composent d'un treillis filtrant.

19. Dispositif conformément à l'une des revendications 8 à 14, **caractérisé par le fait qu'**on utilise un panier de friture (4) à parois latérales (61) fermées, lesquelles parois latérales comportent sur tout leur pourtour des orifices de filtration (62) à la hauteur de remplissage prévue pour le produit à frire (3), et sous le fond en fils métalliques (68) à larges mailles duquel se trouve une surface filtrante (63) recouvrant toute la surface de base.

20. Dispositif conformément à la revendication 19, **caractérisé par le fait que** la surface filtrante (63) peut être arrêtée au-dessus ou au-dessous du fond en fils métalliques (68) au moyen d'une barrette enfichable sur trois côtés ou est amovible sur un côté pour remplacement.

21. Dispositif conformément à la revendication 19 ou 20, **caractérisé par le fait que** le panier de friture (4) comporte sur chacun des côtés opposés une barrette (66, 66a), étant donné que, pour le blocage du panier (60) sur le fon du boîtier du dispositif (1) ou sur un fond de distribution (19), une première barrette (66) peut être introduite dans une monture (65) et une deuxième barrette (66a) sous un dispositif de blocage (65) construit de préférence en acier à ressort.

22. Dispositif conformément à l'une des revendications 19 à 21, **caractérisé par le fait que** le fond du boîtier (1) ou le fond de distribution (19) comporte sur son pourtour un cordon d'étanchéité (67) sur lequel le panier de friture (4) peut être bloqué et supporté de manière étanche au moyen des dispositifs de blocage (64, 65, 66, 66a).

23. Dispositif conformément à l'une des revendications 8 à 10, **caractérisé par le fait que** la conduite (10) d'alimentation de la graisse dans le récipient (2) destiné à accueillir le produit à frire (3) se termine dans le contour de ce dernier et à hauteur de l'arête supérieure (2') de ce dernier et comporte des orifices d'évacuation à cette extrémité (43).

24. Dispositif conformément à la revendication 23, **caractérisé par le fait que** l'extrémité (43) comportant des orifices d'évacuation de la conduite (10) s'étend horizontalement dans au moins un sens à l'intérieur du récipient (2).

25. Dispositif conformément à la revendication 23 ou 24, **caractérisé par le fait que** les orifices d'évacuation se trouvent au-dessous de l'arête supérieure (2') du récipient (2).

26. Dispositif conformément à l'une des revendications 23 à 25, **caractérisé par le fait qu'**on a prévu pour l'accueil du produit à frire (3) un panier (4) pouvant être installé dans le récipient (2), panier dont les parois latérales sont fermée et qui, lorsqu'il est installé, déborde au-delà de l'arête supérieure du récipient (2), et dot le fond comporte des orifices (36') pour l'évacuation de la graisse.

27. Dispositif conformément à la revendication 26, **caractérisé par le fait que** les orifices (36') se trouvant au fond du panier (4) sont dimensionnés de manière à ce que les particules séparées du produit à frire (3) restent dans le panier (36).

28. Dispositif conformément à Tune des revendications 23 à 27, **caractérisé par le fait qu'**une fente (54) est prévue entre les parois latérales du panier (4) installé et le récipient (2) pour l'acheminement de la graisse sortant du fond du panier (4) à travers les orifices (36').

29. Dispositif conformément à l'une des revendications 8 à 28, **caractérisé par le fait que** le boîtier du dispositif (1) constitue avec la paroi latérale du récipient (2) destiné à accueillir le produit à frire (3) une fente (16) pour l'acheminement de la graisse sortant du récipient (2) par l'arête supérieure de ce dernier vers le dispositif de chauffage (6, 8).

30. Dispositif conformément à l'une des revendications 8 à 29, **caractérisé par le fait qu'**un orifice (12a) est prévu dans le fond (12) du récipient de friture (2), lequel orifice est fermé pendant la phase de friture et, après la phase de friture, peut être ouvert manuellement à l'aide d'un coulisseau (12b) ou à l'aide d'un dispositif d'actionnement afin d'évacuer la graisse.

31. Dispositif conformément à l'une des revendications 8 à 30, **caractérisé par le fait qu'**une station de filtration (40) agencée en aval au-dessous du récipient de friture (2) dans la partie supérieure du compartiment de collecte de graisse (5) de manière à ce que le flux de graisse entier doive traverser le filtre (40) pendant la phase de friture ou pendant l'évacuation de la graisse est prévue.

32. Dispositif conformément à la revendication 31, **caractérisé par le fait que**, de façon alternative, une station de filtration (41) est agencée entre le compartiment de collecte de graisse (5) et le dispositif de chauffage (6, 8).

33. Dispositif conformément à l'une des revendications 8 à 32, **caractérisé par le fait qu'**une dérivation (25a) est prévue dans la conduite de jonction (10), laquelle dérivation débouche dans la partie supérieure du compartiment de collecte de graissé (5) et peut être libérée par une électrovanne commandée par température. ou une vanne thermostatique (25b) de manière à ce que le flux de graisse soit conduit directement en un petit cycle dans le sens d'écoulement (51) - tout en contournant le sens d'écoulement (53) à travers le récipient de friture (2) - dans le compartiment de collecte de graisse (5) tant que la graisse n'a pas encore atteint la température de friture, et peut être bloquée dès que la graisse a atteint la température de friture, ce sur quoi le sens d'écoulement (51) est coupé et le sens d'écoulement (53) à travers le récipient (2) est libéré.

34. Dispositif conformément à l'une des revendications 8 à 33, **caractérisé par le fait que** le dispositif de chauffage comporte des corps de chauffage superficiels (8) qui sont disposés parallèlement l'un avec l'autre et à une courte distance l'un de l'autre de manière à ce qu'ils constituent une voie d'écoulement en forme de méandres ou ondulée pour la graisse qui le traverse.

35. Dispositif conformément à l'une des revendications 9 à 34, **caractérisé par le fait que** le dispositif de recharge (18, 18a) prévu pour l'alimentation en graisse fraîche en fonction du niveau de graisse dans le compartiment de collecte de graisse (5) peut être commandé, et que la graisse fraîche peut être conduite dans le compartiment de collecte de graisse (5), étant donné que le dispositif de recharge (18, 18a) commande l'alimentation en graisse fraîche de manière à ce qu'un niveau défini au préalable ne soit pas sous-dépassé afin d'éviter l'infiltration de l'air dans le circuit de graisse.

36. Dispositif conformément à l'une des revendications 8 à 35, **caractérisé par le fait qu'**un robinet d'écoulement est prévu au moins à l'endroit le plus bas du circuit pour l'évacuation de la graisse.
